(19) **Europäisches Patentamt European Patent Office Office européen des brevets**

(11) **EP 4 622 200 A1**

(12) **EUROPEAN PATENT APPLICATION**
published in accordance with Art. 153(4) EPC

(43) Date of publication:
**24.09.2025 Bulletin 2025/39**

(21) Application number: **22968116.8**

(22) Date of filing: **13.12.2022**

(51) International Patent Classification (IPC):
**H04L 27/00** $^{(2006.01)}$

(52) Cooperative Patent Classification (CPC):
**H04L 27/00**

(86) International application number:
**PCT/CN2022/138741**

(87) International publication number:
**WO 2024/124403 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **HU, Yuanzhou**
  **Shenzhen, Guangdong 518129 (CN)**
• **WANG, Fan**
  **Shenzhen, Guangdong 518129 (CN)**

(74) Representative: **Pfenning, Meinig & Partner mbB Patent- und Rechtsanwälte Theresienhöhe 11a 80339 München (DE)**

(54) **SEQUENCE TRANSMISSION METHOD AND APPARATUS**

(57) A sequence transmission method and an apparatus are provided, which may be applied to a downlink synchronization scenario, a random access scenario, a sensing scenario, a radar scenario, an integrated sensing and communication scenario, or the like, to increase sequence design diversity, and improve sequence design flexibility and target detection accuracy. The method includes: A transmit end apparatus determines N first sequences, and sends the N first sequences. An $n^{th}$ first sequence in the N first sequences is determined based on an $n^{th}$ second sequence in N second sequences, formula (I), $a_m$ is a prime number, M is a positive integer greater than 1, and $n = 0, 1, ..., N - 1$. Each second sequence is a sequence in a Golay complementary pair GCP. The N second sequences include formula (II) first sub-sequence sets, each first sub-sequence set includes $a_m$ second sub-sequence sets, each second sub-sequence set includes formula (III) second sequences, $m = 0, 1, ..., M - 1$, and $a_{-1} = 1$. In each first sub-sequence set, any two adjacent second sub-sequence sets are the same, or second sequences with a same index in any two adjacent second sub-sequence sets form the GCP.

FIG. 4

- Transmit end apparatus
- Receive end apparatus
- S401: Determine N first sequences, where an $n^{th}$ first sequence is determined based on an $n^{th}$ second sequence, and the second sequence is a sequence in a GCP
- S402: The transmit end apparatus sends the N first sequences, and the receive end apparatus receives a first signal (a signal obtained by transmitting the N first sequences)
- S403: Process the first signal based on the N first sequences or N second sequences

EP 4 622 200 A1

**EP 4 622 200 A1**

**Description**

**TECHNICAL FIELD**

Embodiments of this application relate to the communication field, and in particular, to a sequence transmission method and an apparatus.

**BACKGROUND**

In a downlink synchronization system, a random access system, a sensing system, a radar system, an integrated sensing and communication system, or the like, a location and/or a speed of a target object usually need/needs to be obtained and sensed (or detected).

Currently, a sending device may send a time domain signal generated based on a plurality of sequences (which may be referred to as a sequence train). After the time domain signal is transmitted and then received by a receiving device, the receiving device may perform detection based on the received signal. Alternatively, the time domain signal is reflected by a target to generate an echo signal, and the sending device may receive the echo signal and perform detection based on the echo signal. For example, the receiving device or the sending device may calculate an ambiguity function corresponding to the received signal, and detect the location and/or the speed of the target object according to the ambiguity function.

However, currently, there are some limitations on a design manner of the plurality of sequences. For example, a quantity of sequences needs to be a power of 2, which is not flexible enough.

**SUMMARY**

This application provides a sequence transmission method and an apparatus, to increase sequence design diversity and improve sequence design flexibility.

According to a first aspect, a sequence transmission method is provided. The method may be performed by a transmit end apparatus; may be performed by a component of the transmit end apparatus, for example, a processor, a chip, or a chip system of the transmit end apparatus; or may be implemented by a logical module or software that can implement all or some functions of the transmit end apparatus. The method includes: determining N first sequences, and sending the N first sequences. An $n^{th}$ first sequence in the N first sequences is determined based on an $n^{th}$ second sequence in N second sequences, $N = \prod_{m=0}^{M-1} a_m$, $a_m$ is a prime number, M is a positive integer greater than 1, $n = 0,1, ..., N - 1$, and N is a positive integer greater than 1.

Each second sequence is a sequence in a Golay complementary pair GCP. The N second sequences include $\frac{N}{\prod_{i=-1}^{m} a_i}$ first sub-sequence sets. Each first sub-sequence set includes $a_m$ second sub-sequence sets, each second sub-sequence set includes $\prod_{i=-1}^{m-1} a_i$ second sequences, m = 0,1, ... , M - 1, and $a_{-1}$ = 1. In each first sub-sequence set, any two adjacent second sub-sequence sets are the same, or second sequences with a same index in any two adjacent second sub-sequence sets form the GCP.

Based on this solution, $N = \prod_{m=0}^{M-1} a_m$, and $a_m$ is a prime number. Therefore, compared with a solution in which a quantity of sequences is a power of 2, this application supports more values of the quantity of sequences, and therefore supports flexible selection of appropriate values of N based on different low ambiguity zone requirements and detection precision requirements. In addition, the any two adjacent second sub-sequence sets are the same, or the second sequences with the same index in the any two adjacent second sub-sequence sets form the GCP. Therefore, this application supports flexible design of relationships between second sub-sequence sets based on different low ambiguity zone requirements and detection precision requirements. In other words, in the solution of this application, sequence design diversity is increased, and sequence design flexibility is improved, so that flexible design of the N first sequences based on an actual requirement can be supported, and detection performance can be improved.

In a possible design, the N first sequences form a first sequence set; and determining the N first sequences includes: determining, based on a first threshold, the first sequence set from a plurality of sequence sets, where in a low ambiguity zone of an ambiguity function corresponding to the first sequence set, a value of the ambiguity function corresponding to the first sequence set is less than or equal to the first threshold.

According to a second aspect, a sequence receiving method is provided. The method may be performed by a receive end apparatus; may be performed by a component of the receive end apparatus, for example, a processor, a chip, or a chip system of the receive end apparatus; or may be implemented by a logical module or software that can implement all or some functions of the receive end apparatus. The method includes: receiving a first signal, and processing the first signal based on N first sequences or N second sequences. The first signal is a signal obtained by transmitting the N first sequences, an $n^{th}$ first sequence in the N first sequences is determined based on an $n^{th}$ second sequence in the N second sequences, $N = \prod_{m=0}^{M-1} a_m$ , $a_m$ is a prime number, M is a positive integer greater than 1, $n = 0,1, ..., N$ - 1, and N is a positive integer greater than 1.

Each second sequence is a sequence in a Golay complementary pair GCP. The N second sequences include $\frac{N}{\prod_{i=-1}^{m} a_i}$ first sub-sequence sets. Each first sub-sequence set includes $a_m$ second sub-sequence sets, each second sub-sequence set includes $\prod_{i=-1}^{m-1} a_i$ second sequences, $m = 0,1, ... , M$ - 1, and $a_{-1} = 1$. In each first sub-sequence set, any two adjacent second sub-sequence sets are the same, or second sequences with a same index in any two adjacent second sub-sequence sets form the GCP.

For technical effects brought by the second aspect, refer to the technical effects brought by the first aspect. Details are not described herein again.

With reference to the first aspect or the second aspect, in a possible design, the N second sequences include $\left\lfloor \frac{N}{2} \right\rfloor$ sequence groups, there are at least two different sequence groups in the $\left\lfloor \frac{N}{2} \right\rfloor$ sequence groups, and ⌊ ⌋ indicates rounding down. When N is an odd number, the $\left\lfloor \frac{N}{2} \right\rfloor$ sequence groups include first N-1 second sequences in the N second sequences. Each sequence group includes two second sequences, and the two second sequences are adjacent to each other in the N second sequences.

Based on this possible design, because there are at least two different sequence groups in a plurality of sequence groups included in the N second sequences, the N second sequences are not generated by repeating first two second sequences, so that a problem that a low ambiguity zone of an ambiguity function is not distinct due to repetition of the first two second sequences can be avoided. In other words, based on this design of the N second sequences, under a specific threshold, there may be a distinct low ambiguity zone of the ambiguity function, so that detection performance can be improved compared with a solution in which the GCP is repeated.

With reference to the first aspect or the second aspect, in a possible design, $a_m$, m = 0, 1, ...,M - 1 forms $a = [a_0, ..., a_{M-1}]$ , there is at least one odd number $a_j$ in $a$, second sequences with a same index in any two adjacent second sub-sequence sets in the first sub-sequence set corresponding to $a_j$ form the GCP, and $j$ is an integer from 0 to M-1.

Based on this possible design, because there is at least one odd number $a_j$, the quantity N of sequences may not be limited to including only a factor 2, and more values of the quantity of sequences can be supported. In the foregoing design, in a plurality of second sub-sequence sets included in the first sub-sequence set corresponding to the odd number factor $a_j$, the second sequences with the same index in the any two adjacent second sub-sequence sets form the GCP. In other words, based on this design, sequence design diversity is increased, and sequence design flexibility is improved, so that flexible design of a plurality of sequences based on an actual requirement can be supported, and detection performance can be improved.

With reference to the first aspect or the second aspect, in a possible design, $a_m$, m = 0,1, ... ,M - 1 forms $a = [a_0, ..., a_{M-1}]$, there is at least one $a_k$ in $a$, any two adjacent second sub-sequence sets in the first sub-sequence set corresponding to $a_k$ are the same, and $k$ is an integer from 1 to M-1.

Based on this possible design, in a factor other than a 1st factor, there is at least one factor for which any two adjacent second sub-sequence sets in a first sub-sequence set corresponding to the factor are the same. In other words, based on this design, sequence design diversity is increased, and sequence design flexibility is improved, so that flexible design of a plurality of sequences based on an actual requirement can be supported, and detection performance can be improved.

With reference to the first aspect or the second aspect, in a possible design, $a = [a_0, ..., a_{M-1}]$, there is at least one $a_k$ in $a$, and any two adjacent second sub-sequence sets in each first sub-sequence set corresponding to $a_k$ are the same; and there is at least one $a_q$ in $a$, and second sequences with a same index in any two adjacent second sub-sequence sets in each first sub-sequence set corresponding to $a_q$ form the GCP. $k$ and $q$ are integers from 1 to M-1, and M is greater than 2. Optionally, $q$ is greater than $k$, or $q$ is less than $k$.

Based on this possible design, the quantity N of sequences may include at least three factors, the quantity N of sequences may not be limited to include only a factor 2, and more values of the quantity of sequences can be supported. In factors other than a 1st factor, there is at least one factor for which any two adjacent second sub-sequence sets in a first sub-sequence set corresponding to the factor are the same; and there is at least one factor for which second sequences with a same index in any two adjacent second sub-sequence sets in a first sub-sequence set corresponding to the factor form the GCP. In other words, based on this design, sequence design diversity is increased, and sequence design flexibility is improved, so that flexible design of a plurality of sequences based on an actual requirement can be supported, and detection performance can be improved.

With reference to the first aspect or the second aspect, in a possible design, the N second sequences correspond to a first extension sequence. When an $n^{th}$ element in the first extension sequence is a first value, the $n^{th}$ second sequence in the N second sequences is the sequence x in the GCP; or when an $n^{th}$ element in the first extension sequence is a second value, the $n^{th}$ second sequence in the N second sequences is the sequence y in the GCP.

The $n^{th}$ element in the first extension sequence is related to $\prod_{m=0}^{M-1}(c_m)^{b_m}$ , $b_m$ satisfies

$$n = \sum_{m=0}^{M-1}\left(b_m \times \prod_{i=-1}^{m-1} a_i\right)$$ , $a_{-1} = 1$, $b_m = 0,1, ..., a_m - 1$, $c_m$ is equal to 1 or -1, $m = 0,1, ..., M - 1$, and $n = 0,1, ...,N - 1$.

With reference to the first aspect or the second aspect, in a possible design, the first extension sequence includes $\left\lfloor \frac{N}{2} \right\rfloor$ element groups, there are at least two different element groups in the $\left\lfloor \frac{N}{2} \right\rfloor$ element groups, and ⌊ ⌋ indicates rounding down. When N is an odd number, the $\left\lfloor \frac{N}{2} \right\rfloor$ element groups include first N-1 elements in the first extension sequence. Each element group includes two elements, and the two elements are adjacent in the first extension sequence.

Based on this possible design, there are at least two different element groups in a plurality of element groups, so that there may be at least two different sequence groups in the plurality of sequence groups included in the N second sequences. In this way, a problem that a low ambiguity zone of an ambiguity function is not distinct due to repetition of first two second sequences can be avoided. In other words, based on this design of the N second sequences, under a specific threshold, there may be a distinct low ambiguity zone of the ambiguity function, so that detection performance can be improved compared with a solution in which the GCP is repeated.

With reference to the first aspect or the second aspect, in a possible design, $\boldsymbol{a} = [a_0, ..., a_{M-1}]$, there is at least one odd number $a_j$ in $\boldsymbol{a}$, $c_j$ corresponding to $a_j$ is equal to -1, and $j$ is an integer from 0 to M-1.

Based on this possible design, $c_j$ corresponding to $a_j$ is equal to **-1**, so that in each first sub-sequence set corresponding to the odd number factor $a_j$, second sequences with a same index in any two adjacent second sub-sequence sets form the GCP. In this way, sequence design diversity is increased, and sequence design flexibility is improved, so that flexible design of a plurality of sequences based on an actual requirement can be supported, and detection performance can be improved.

With reference to the first aspect or the second aspect, in a possible design, $\boldsymbol{a} = [a_0, ..., a_{M-1}]$, there is at least one $a_k$ in $\boldsymbol{a}$, $c_k$ corresponding to $a_k$ is equal to 1, and $k$ is an integer from 1 to M-1.

Based on this possible design, $c_k$ corresponding to the factor $a_k$ is equal to **1**, so that in each first sub-sequence set corresponding to $a_k$, any two adjacent second sub-sequence sets are the same. In this way, sequence design diversity is increased, and sequence design flexibility is improved, so that flexible design of a plurality of sequences based on an actual requirement can be supported, and detection performance can be improved.

With reference to the first aspect or the second aspect, in a possible design, $\boldsymbol{a} = [a_0, ..., a_{M-1}]$, there is at least one $a_k$ in $\boldsymbol{a}$, and $c_k$ corresponding to $a_k$ is equal to **1**; and there is at least one $a_q$ in $\boldsymbol{a}$, and $c_q$ corresponding to $a_q$ is equal to **-1**. $k$ and $q$ are integers from 1 to M-1, and M is greater than 2. Optionally, $q$ is greater than $k$, or $q$ is less than $k$.

Based on this possible design, $c_k$ corresponding to the factor $a_k$ is equal to **1,** so that in each first sub-sequence set corresponding to $a_k$, any two adjacent second sub-sequence sets are the same; and $c_q$ corresponding to the factor $a_q$ is equal to -1, so that in each first sub-sequence set corresponding to $a_q$, second sequences with a same index in any two adjacent second sub-sequence sets form the GCP. In this way, sequence design diversity is increased, and sequence design flexibility is improved, so that flexible design of a plurality of sequences based on an actual requirement can be supported, and detection performance can be improved.

With reference to the first aspect or the second aspect, in a possible design, the $n^{th}$ element in the first extension sequence satisfies at least one of the following:

$$s_{ext}(n) = \prod_{m=0}^{M-1}(c_m)^{b_m}$$

$$s_{ext}(n) = \frac{1}{2} - \frac{1}{2}\prod_{m=0}^{M-1}(c_m)^{b_m}$$

$s_{ext}(n)$ represents the $n^{th}$ element in the first extension sequence.

With reference to the first aspect or the second aspect, in a possible design, the first extension sequence includes first N elements in a second extension sequence, a length of the second extension sequence is Q times a length of the first extension sequence, and Q is greater than 1; and/or a third extension sequence includes first N/Q elements in the first extension sequence, and the length of the first extension sequence is Q times a length of the third extension sequence.

With reference to the first aspect or the second aspect, in a possible design, $a = [a_0, ..., a_{M-1}]$, $c = [c_0, ..., c_{M-1}]$, and $a$ and $c$ satisfy at least one of the following:

when N is equal to 10, $a$ =[2, 5], and $c$ =[-1, -1];
when N is equal to 12, $a$ =[2, 2, 3], and $c$ =[-1, -1, -1];
when N is equal to 12, $a$ =[3, 2, 2], and $c$ =[-1, 1, -1];
when N is equal to 14, $a$ =[2, 7], and $c$ =[-1, -1];
when N is equal to 16, $a$ =[2, 2, 2, 2], and $c$ =[-1, -1, 1, 1];
when N is equal to 16, $a$ =[2, 2, 2, 2], and $c$ =[-1, -1, -1, 1];
when N is equal to 18, $a$ =[2, 3, 3], and $c$ =[-1, -1, 1];
when N is equal to 18, $a$ =[2, 3, 3], and $c$ =[-1, -1, -1];
when N is equal to 18, $a$ =[3, 3, 2], and $c$ =[-1, 1, -1];
when N is equal to 20, $a$ =[2, 2, 5], and $c$ =[-1, -1, -1];
when N is equal to 20, $a$ =[2, 5, 2], and $c$ =[-1, -1, 1];
when N is equal to 22, $a$ =[2, 11], and $c$ =[-1, -1];
when N is equal to 24, $a$ =[2, 3, 2, 2], and $c$ =[-1, -1, 1, 1]; or
when N is equal to 24, $a$ =[3, 2, 2, 2], and $c$ =[-1, 1, -1, 1].

With reference to the first aspect or the second aspect, in a possible design, the first value is 1, the second value is -1, and the first extension sequence is at least one of the following:

when N is equal to 10, the first extension sequence is [1, -1, -1, 1, 1, -1, -1, 1, 1, -1];
when N is equal to 12, the first extension sequence is [1, -1, -1, 1, -1, 1, 1, -1, 1, -1, -1, 1];
when N is equal to 12, the first extension sequence is [1, -1, 1, 1, -1, 1, -1, 1, -1, -1, 1, -1];
when N is equal to 14, the first extension sequence is [1, -1, -1, 1, 1, -1, -1, 1, 1, -1, -1, 1, 1, -1];
when N is equal to 16, the first extension sequence is [1, -1, -1, 1, 1, -1, -1, 1, 1, -1, -1, 1, 1, -1, -1, 1];
when N is equal to 16, the first extension sequence is [1, -1, -1, 1, -1, 1, 1, -1, 1, -1, -1, 1, -1, 1, 1, -1];
when N is equal to 18, the first extension sequence is [1, -1, -1, 1, 1, -1, 1, -1, -1, 1, 1, -1, 1, -1, -1, 1, 1, -1];
when N is equal to 18, the first extension sequence is [1, -1, -1, 1, 1, -1, -1, 1, 1, -1, -1, 1, 1, -1, -1, 1, 1, -1];
when N is equal to 18, the first extension sequence is [1, -1, 1, 1, -1, 1, 1, -1, 1, -1, 1, -1, -1, 1, -1, -1, 1, -1];
when N is equal to 20, the first extension sequence is [1, -1, -1, 1, -1, 1, 1, -1, 1, -1, -1, 1, -1, 1, 1, -1, 1, -1, -1, 1];
when N is equal to 20, the first extension sequence is [1, -1, -1, 1, 1, -1, -1, 1, 1, -1, 1, -1, -1, 1, 1, -1, -1, 1, 1, -1];
when N is equal to 22, the first extension sequence is [1, -1, -1, 1, 1, -1, -1, 1, 1, -1, -1, 1, 1, -1, -1, 1, 1, -1, -1, 1, 1, -1];
when N is equal to 24, the first extension sequence is [1, -1, -1, 1, 1, -1, 1, -1, -1, 1, 1, -1, 1, -1, -1, 1, 1, -1, 1, -1, -1, 1, 1, -1]; or
when N is equal to 24, the first extension sequence is [1, -1, 1, 1, -1, 1, -1, 1, -1, -1, 1, -1, 1, -1, 1, 1, -1, 1, -1, 1, -1, -1, 1, -1].

With reference to the first aspect or the second aspect, in a possible design, the nth first sequence in the N first sequences and the nth second sequence in the N second sequences satisfy one of the following:

the nth first sequence is the same as the nth second sequence;
the nth first sequence is obtained by splicing the nth second sequence and at least one 0;
the nth first sequence is obtained by performing cyclic extension on the nth second sequence; or
the nth first sequence is obtained by splicing at least one 0 and a result obtained by performing cyclic extension on the nth second sequence.

With reference to the first aspect or the second aspect, in a possible design, when the nth first sequence is obtained by performing cyclic extension on the nth second sequence,

$$d_{1,n}(i) = d_{2,n}[(i + \Delta) \, mod \, L_2], i = 0,1, ..., L_1 - 1$$

$d_{1,n}(i)$ represents an ith element in the nth first sequence; $d_{2,n}(i)$ represents an ith element in the nth second sequence; $\Delta$ represents an offset of cyclic extension; mod represents a modulo operation; $L_2$ is a length of the second sequence; and $L_1$ is a length of the first sequence.

With reference to the first aspect or the second aspect, in a possible design, the N second sequences are at least one of the following:

when N is equal to 10, the N second sequences are {x, y, y, x, x, y, y, x, x, y};
when N is equal to 12, the N second sequences are {x, y, y, x, y, x, x, y, x, y, y, x};
when N is equal to 12, the N second sequences are {x, y, x, x, y, x, y, x, y, y, x, y};
when N is equal to 14, the N second sequences are {x, y, y, x, x, y, y, x, x, y, y, x, x, y};
when N is equal to 16, the N second sequences are {x, y, y, x, x, y, y, x, x, y, y, x, x, y, y, x};
when N is equal to 16, the N second sequences are {x, y, y, x, y, x, x, y, x, y, y, x, y, x, x, y};
when N is equal to 18, the N second sequences are {x, y, y, x, x, y, x, y, y, x, x, y, x, y, y, x, x, y};
when N is equal to 18, the N second sequences are {x, y, y, x, x, y, y, x, x, y, y, x, x, y, y, x, x, y};
when N is equal to 18, the N second sequences are {x, y, x, x, y, x, x, y, x, y, x, y, y, x, y, y, x, y};
when N is equal to 20, the N second sequences are {x, y, y, x, y, x, x, y, x, y, y, x, y, x, x, y, x, y, y, x};
when N is equal to 20, the N second sequences are {x, y, y, x, x, y, y, x, x, y, x, y, y, x, x, y, y, x, x, y};
when N is equal to 22, the N second sequences are {x, y, y, x, x, y, y, x, x, y, y, x, x, y, y, x, x, y, y, x, x, y};
when N is equal to 24, the N second sequences are {x, y, y, x, x, y, x, y, x, x, y, x, y, y, x, x, y, x, y, y, x, x, y}; or
when N is equal to 24, the N second sequences are {x, y, x, x, y, x, y, x, y, y, x, y, x, y, x, x, y, x, y, x, y, y, x, y}, where x represents the sequence x in the GCP, and y represents the sequence y in the GCP.

According to a third aspect, a communication apparatus is provided, to implement the foregoing methods. The communication apparatus may be the transmit end apparatus in the first aspect, or an apparatus, for example, a chip, included in the transmit end apparatus; or the communication apparatus may be the receive end apparatus in the second aspect, or an apparatus, for example, a chip, included in the receive end apparatus.

The communication apparatus includes a corresponding module, unit, or means (means) for implementing the methods. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may include a sending module and a receiving module, which are respectively configured to implement a sending function and a receiving function in any one of the foregoing aspects and the possible designs thereof. The processing module may be configured to implement a processing function in any one of the foregoing aspects and the possible designs thereof.

According to a fourth aspect, a communication apparatus is provided. The apparatus includes at least one processor. The processor is configured to execute computer instructions stored in a memory or enable, through a logic circuit, the communication apparatus to perform the method according to any one of the foregoing aspects. The communication apparatus may be the transmit end apparatus in the first aspect, or an apparatus, for example, a chip, included in the transmit end apparatus; or the communication apparatus may be the receive end apparatus in the second aspect, or an apparatus, for example, a chip, included in the receive end apparatus.

In some possible designs, the communication apparatus further includes the memory, configured to store the computer instructions and/or a configuration file of the logic circuit. Optionally, the memory and the processor are integrated together, or the memory is independent of the processor.

According to a fifth aspect, a communication apparatus is provided. The apparatus includes a processor and a communication interface. The communication interface is configured to input a signal and/or output a signal. The processor is configured to execute a computer program or instructions, to enable the communication apparatus to perform the method according to any one of the foregoing aspects. The communication apparatus may be the transmit end apparatus in the first aspect, or an apparatus, for example, a chip, included in the transmit end apparatus; or the communication apparatus may be the receive end apparatus in the second aspect, or an apparatus, for example, a chip, included in the receive end apparatus.

In some possible designs, the communication interface is an interface circuit, and is configured to read and write computer instructions. For example, the interface circuit is configured to receive computer-executable instructions (the computer-executable instructions are stored in a memory, and may be directly read from the memory, or may be read through another device) and transmit the computer-executable instructions to the processor.

In some possible designs, the communication interface is configured to communicate with a module outside the communication apparatus.

In some possible designs, the communication apparatus may be a chip or a chip system. When the apparatus is a chip system, the chip system may include a chip, or may include a chip and another discrete device.

According to a sixth aspect, a communication apparatus is provided. The apparatus includes a logic circuit and an interface circuit. The interface circuit is configured to input information and/or output information. The logic circuit is configured to perform the method according to any one of the foregoing aspects, to perform processing based on the input information and/or generate the output information. The communication apparatus may be the transmit end apparatus in the first aspect, or an apparatus, for example, a chip, included in the transmit end apparatus; or the communication apparatus may be the receive end apparatus in the second aspect, or an apparatus, for example, a chip, included in the receive end apparatus.

According to a seventh aspect, a computer-readable storage medium is provided. The computer-readable storage medium stores a computer program or instructions. When the computer program or the instructions are executed by a processor, the method according to any one of the foregoing aspects is performed.

According to an eighth aspect, a computer program product is provided. When the computer program product is executed by a processor, the method according to any one of the foregoing aspects is performed.

It may be understood that, when the communication apparatus provided in any one of the third aspect to the eighth aspect is a chip, a sending action/function described above may be understood as information output, and a receiving action/function described above may be understood as information input.

For technical effects brought by any design manner of the third aspect to the eighth aspect, refer to the technical effects brought by different design manners of the first aspect or the second aspect. Details are not described herein again.

According to a ninth aspect, a communication system is provided. The communication system includes the transmit end apparatus according to the first aspect and the receive end apparatus according to the second aspect.

## BRIEF DESCRIPTION OF DRAWINGS

FIG. 1a is a diagram of relative locations between sequences according to this application;

FIG. 1b is a diagram of simulation of a spectral function corresponding to a Prouhet-Thue-Morse PTM sequence according to this application;

FIG. 1c is a diagram of simulation of a spectral function of an extension sequence corresponding to a Golay complementary pair GCP repeat sequence according to this application;

FIG. 2 is a diagram of a structure of a communication system according to this application;

FIG. 3 is a diagram of a structure of a communication apparatus according to this application;

FIG. 4 is a diagram of interaction of a sequence transmission method according to this application;

FIG. 5 is a diagram of simulation of a spectral function corresponding to a first extension sequence according to this application;

FIG. 6 is a diagram of simulation of a spectral function corresponding to another first extension sequence according to this application;

FIG. 7 is a diagram of a structure of a transmit end apparatus according to this application;

FIG. 8 is a diagram of a structure of a receive end apparatus according to this application; and

FIG. 9 is a diagram of a structure of another communication apparatus according to this application.

## DESCRIPTION OF EMBODIMENTS

Unless otherwise specified, "/" in descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists. A and B may be singular or plural.

In the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity and an execution sequence, and the terms such as "first" and "second" do not indicate a definite difference.

In embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not constitute any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts of embodiments, refer to each other. In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding the technical solutions in embodiments of this application, conventional technologies of this application are first briefly described below.

(1) A correlation (correlation) operation: The correlation operation is a processing process between two sequences, including multiplication and addition operations between different elements of the two sequences. The correlation operation may include a periodic correlation operation or an aperiodic correlation operation.

(2) Autocorrelation: If two sequences are the same, a correlation operation between the two sequences is referred to as an autocorrelation (or an autocorrelation operation).

(3) Cross-correlation: If two sequences are different, a correlation operation between the two sequences is referred to as a cross-correlation (or a cross-correlation operation).

(4) Aperiodic autocorrelation: When sequence autocorrelation calculation is performed, a correlation value of overlapping elements of two sequences is calculated based on a relative displacement between the sequences. If a sequence length is L, there may be a total of 2L-1 cases for a relative displacement value between the sequences: -L+1, -L+2, ..., -1, 0, 1, ..., L-2, and L-1. Therefore, there are a total of 2L-1 results for an aperiodic autocorrelation operation.

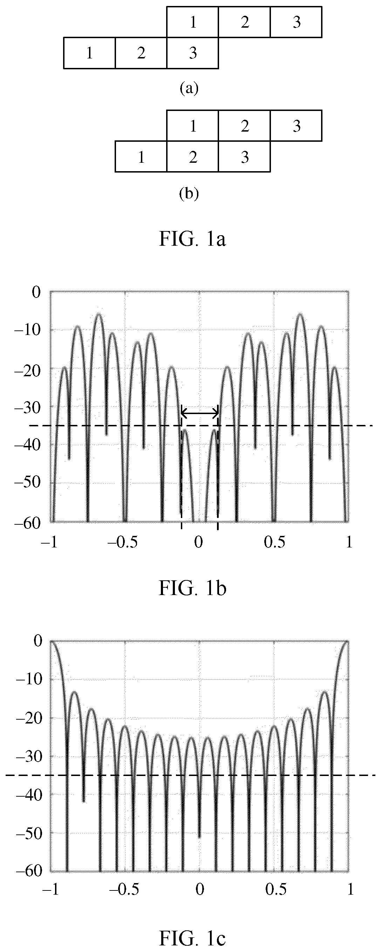

For example, for sequences [1, 2, 3], when a relative displacement value between the sequences is -2, a status of relative locations between the sequences may be shown in (a) in FIG. 1a. In this case, an aperiodic autocorrelation result is $1 \times 3 = 3$.

When a relative displacement value between the sequences is -1, relative locations between the sequences may be shown in (b) in FIG. 1a. In this case, an aperiodic autocorrelation result is $1 \times 2 + 2 \times 3 = 8$. By analogy, when relative displacement values between the sequences are separately -2, -1, 0, 1, and 2, aperiodic autocorrelation results of the sequences are sequentially 3, 8, 14, 8, and 3.

Optionally, there may alternatively be a total of L cases for the relative displacement value of the aperiodic autocorrelation operation: 0, 1, ..., L-2, and L-1. For example, when an aperiodic autocorrelation operation is performed on a sequence $q_1$ with a length of L, a $k^{th}$ value (or a value obtained when a relative displacement value is k) obtained based on the aperiodic autocorrelation operation may be represented as $\sum_{i=0}^{L-k-1} q_1(i)q_1(i+k)$, $k = 0, 1, ..., L-1$.

It may be understood that a processing process of an aperiodic cross-correlation operation is similar to that of the aperiodic autocorrelation operation.

(5) Golay complementary pair (Golay complementary pair, GCP):

The GCP may also be referred to as a Golay complementary pair, Golay complementary sequences, or GCP sequences, and is a type of perfect aperiodic autocorrelation sequences. The GCP is defined as a pair of sequences with a code length of $L$, that is, a sequence $x$ and a sequence $y$. If a sum of aperiodic autocorrelation functions (aperiodic autocorrelation functions, AACFs) of the sequences is 0 at all displacements except a 0 displacement, the two sequences are a GCP. For the sequence $x = [x(0), x(1), ..., x(L-1)]$, an AACF of the sequence may be defined as:

$$C_x(k) = \sum_{n=0}^{L-1-k} x(n)x(n+k), 0 \le k \le L-1$$

$k$ represents a displacement; and when $k$ is equal to 0, it represents the 0 displacement. An AACF (represented as $C_y(k)$) of the sequence $\boldsymbol{y}$ is similar to the AACF of the sequence $\boldsymbol{x}$. For details, refer to the descriptions of $C_x(k)$. Details are not described herein again.

For example, for sequences $\boldsymbol{x} = [1,1, 1, -1]$ and y = [1,1, -1,1], because an AACF of the sequence $\boldsymbol{x}$ is $C_x = [4,1,0, -1]$, $k = 0, ...,3$, an AACF of the sequence $\boldsymbol{y}$ is $C_y = [4, -1,0,1]$, $k = 0, ...,3$, and $C_x + C_y = [8,0,0,0]$, the sequences $\boldsymbol{x}$ and $y$ are a GCP.

(6) Ambiguity function (ambiguity function):

The ambiguity function may be used to measure impact of a Doppler frequency shift and a transmission delay on sequence sending. The Doppler frequency shift is caused by motion of a target object, and may be approximately equivalent to continuous phase rotation of a time-domain continuous signal sent by a transmit end.

In a scenario in which a plurality of sequences need to be sent, the transmit end may sequentially generate, based on the plurality of sequences, time-domain continuous signals that carry the plurality of sequences, and send the time-domain continuous signals. Time-domain continuous signals received by a receive end may be affected by a Doppler frequency shift, so that the receive end may measure, by using an ambiguity function, impact of the Doppler frequency shift on the sent signals (or the plurality of sent sequences).

For example, when each of the plurality of sent sequences is a sequence x or a sequence y in a GCP, the ambiguity function A may be approximately represented by the following formula (1):

$$A(\tau, v) \approx \frac{1}{2}\left[C_x(\tau) + C_y(\tau)\right] \sum_{n=0}^{N-1} e^{j2\pi vn/N} + \frac{1}{2}\left[C_x(\tau) - C_y(\tau)\right] \sum_{n=0}^{N-1} s_{ext}(n)e^{j2\pi vn/N} \qquad (1)$$

$\tau$ is a discrete index of a time domain (or a delay domain), and a value may be 0 to L-1, where L is a sequence length. $v$ is a discrete index of a Doppler domain, and a value may be 0 to N-1, where N is a quantity of the sent sequences. $C_x(\tau)$ and $C_y(\tau)$ are respectively autocorrelation results (for example, aperiodic autocorrelation results) of the sequence x and the sequence y. $e^{j2\pi vn/N}$ is a phase factor introduced by the Doppler frequency shift.

$s_{ext}(n)$ represents an $n^{th}$ element in an extension sequence. The extension sequence is used to determine whether each of the plurality of sequences is the sequence x or the sequence y. For example, when a value of a specific element in the extension sequence is 1, an $n^{th}$ sequence in the plurality of sequences is the sequence x; or when a value of a specific element in the extension sequence is -1, an $n^{th}$ sequence in the plurality of sequences is the sequence y.

Because the GCP has a perfect aperiodic autocorrelation property, impact of $\frac{1}{2}\left[C_x(\tau) + C_y(\tau)\right] \sum_{n=0}^{N-1} e^{j2\pi vn/N}$ on the ambiguity function can be ignored. In addition, when $\tau$ is set to different values, $\frac{1}{2}\left[C_x(\tau) - C_y(\tau)\right] \sum_{n=0}^{N-1} s_{ext}(n)e^{j2\pi vn/N}$ is always proportional to $\sum_{n=0}^{N-1} s_{ext}(n)e^{j2\pi vn/N}$. In other words, the ambiguity function is mainly affected by $\sum_{n=0}^{N-1} s_{ext}(n)e^{j2\pi vn/N}$. Therefore, it may be defined that a Doppler-based spectral function $B$ of the extension sequence $s_{ext}$ satisfies the following formula (2):

$$B(v) = \sum_{n=0}^{N-1} s_{ext}(n)e^{j2\pi vn/N} \qquad (2)$$

Sending the plurality of sequences may enable the ambiguity function of the plurality of sequences to generate a low ambiguity zone (low ambiguity zone). The low ambiguity zone of the ambiguity function may be determined based on a threshold. In the low ambiguity zone of the ambiguity function, values of the ambiguity function are all less than or equal to the threshold. In other words, the low ambiguity zone of the ambiguity function is a zone in which a value of the ambiguity function is less than or equal to a specific threshold.

The low ambiguity zone enables a receiver to more accurately detect a location and/or a speed of the target object. In addition, in the low ambiguity zone, a plurality of target objects can also be more accurately distinguished, and a location and/or a speed of each target object are/is separately detected. Usually, a larger range of the low ambiguity zone indicates a larger speed range that can be detected, and more target objects that can be distinguished in a specific speed range.

It may be understood that, because the ambiguity function of the plurality of sequences is mainly affected by the formula (2), a low ambiguity zone of the spectral function shown in the formula (2) can be used as an equivalent to the low ambiguity zone of the ambiguity function.

In addition, because the extension sequence is used to determine whether each of the plurality of sequences is the sequence x or the sequence y, it may also be understood that the low ambiguity zone of the ambiguity function of the plurality of sent sequences is affected by an arrangement manner (that is, each sequence is the sequence x or the sequence y) of the plurality of sequences.

Each of the plurality of sent sequences may be the sequence x or the sequence y in the GCP. In some possible implementations, whether a specific sequence is the sequence x or the sequence y may be determined in the following two manners:

Manner 1: Perform determining based on a Prouhet-Thue-Morse (Prouhet-Thue-Morse, PTM) sequence:

The PTM sequence is a binary sequence, that is, a value of each element in the PTM sequence is 1 or -1, or a value of each element is 0 or 1.

When the plurality of sent sequences are determined based on the PTM sequence, the PTM sequence is an extension sequence corresponding to the plurality of sequences. N elements in the PTM sequence are in one-to-one correspondence with N sequences. The quantity N of sequences is a power of 2, that is, $N = 2^M$, and M is a positive integer.

For example, it may be defined that when a value of an element in the PTM sequence is 1, a corresponding sequence is the sequence x in the GCP; and correspondingly, when a value of an element in the PTM sequence is -1, a corresponding sequence is the sequence y in the GCP. Alternatively, it may be defined that when a value of an element in the PTM sequence is 0, a corresponding sequence is the sequence x in the GCP; and correspondingly, when a value of an element in the PTM sequence is 1, a corresponding sequence is the sequence y in the GCP.

For example, a PTM sequence with M=4 and N=16 is [1, -1, -1, 1, -1, 1, 1, -1, -1, 1, 1, -1, 1, -1, -1, 1] or [0, 1, 1, 0, 1, 0, 0, 1, 1, 0, 0, 1, 0, 1, 1, 0]. In this case, 16 sequences that are correspondingly sent should be [x, y, y, x, y, x, x, y, y, x, x, y, x, y, y, x].

It should be noted that, in embodiments of this application, unless otherwise specified, x represents the sequence x in the GCP, and y represents the sequence y in the GCP. This is uniformly described herein, and details are not described in subsequent embodiments.

For example, when M is equal to 5 and N is equal to 32, a spectral function that is of a PTM sequence with a length of 32 and that is obtained according to the formula (2) is shown in FIG. 1b. A vertical coordinate is energy (or a value) of the spectral function, and is in a unit of dB. A horizontal coordinate is $2v/N$, $-N/2 \leq v \leq N/2$, and v is a real number. For example, a threshold is -35 dB. It can be learned from FIG. 1b that there is a zone in which energy of the spectral function is less than or equal to -35 dB near a value 0 of the horizontal coordinate, that is, there is a low ambiguity zone near the value 0 of the horizontal coordinate. When the horizontal coordinate is 0, a value of v is 0. v being 0 indicates that a movement speed of a target is 0, or indicates that the target is still.

Manner 2: Perform determining based on GCP repetition:

In this manner, the sequence x and the sequence y in the GCP may be repeated to obtain N sequences. For example, when N=16, 16 corresponding sequences may be [x, y, x, y, x, y, x, y, x, y, x, y, x, y, x, y]. When N=15, 15 corresponding sequences may be [x, y, x, y, x, y, x, y, x, y, x, y, x, y, x].

Similar to the manner 1, an extension sequence may also be defined in the manner 2. When an element in the extension sequence is 1 (or 0), a corresponding sequence is the sequence x in the GCP. When an element in the extension sequence is -1 (or 1), a corresponding sequence is the sequence y in the GCP.

For example, when N=16, a corresponding extension sequence may be [1, -1, 1, -1, 1, -1, 1, -1, 1, -1, 1, -1, 1, -1, 1, -1] or [0, 1, 0, 1, 0, 1, 0, 1, 0, 1, 0, 1, 0, 1, 0, 1]. When N=15, a corresponding extension sequence may be [1, -1, 1, -1, 1, -1, 1, -1, 1, -1, 1, -1, 1, -1, 1] or [0, 1, 0, 1, 0, 1, 0, 1, 0, 1, 0, 1, 0, 1, 0].

In the foregoing manner 1, the plurality of sent sequences are limited. For example, the quantity of the sent sequences needs to be a power of 2, and cannot be flexibly adjusted. In the foregoing manner 2, although the quantity of sequences can be flexibly adjusted, an ambiguity function of the sequences does not have a distinct low ambiguity zone, and location and/or speed detection performance is not ideal.

For example, N is equal to 18, and an extension sequence in the manner 2 is [1, -1, 1, -1, 1, -1, 1, -1, 1, -1, 1, -1, 1, -1, 1, -1, 1, -1]. A spectral function that is of the extension sequence and that is obtained according to the formula (2) is shown in FIG. 1c. A vertical coordinate is energy (or a value) of the spectral function, and is in a unit of dB. A horizontal

coordinate is $2v/N$, $-N/2 \leq v \leq N/2$, and $v$ is a real number. It is assumed that a threshold is -35 dB, that is, a zone in which energy of the spectral function is less than -35 dB is considered as a low ambiguity zone. However, it can be learned from FIG. 1c that energy of the spectral function corresponding to the extension sequence is large, and there is no low ambiguity zone.

Based on this, this application provides a sequence transmission method. In the method, a transmit end sends N first sequences. An $n^{th}$ first sequence is determined based on an $n^{th}$ second sequence in N second sequences,

$$N = \prod_{m=0}^{M-1} a_m$$

, $a_m$ is a prime number, M is a positive integer greater than 1, and $n = 0, 1, \ldots, N - 1$.

Each second sequence is a sequence in a GCP. The N second sequences include $\frac{N}{\prod_{i=-1}^{m} a_i}$ first sub-sequence sets, each first sub-sequence set includes $a_m$ second sub-sequence sets, each second sub-sequence set includes $\prod_{i=-1}^{m-1} a_i$ second sequences, $m = 0, 1, \ldots, M-1$, and $a_{-1} = 1$. In each first sub-sequence set, any two adjacent second sub-sequence sets are the same, or second sequences with a same index in any two adjacent second sub-sequence sets form a GCP.

Based on the solution of this application, because $N = \prod_{m=0}^{M-1} a_m$ and $a_m$ are prime numbers, compared with the foregoing manner 1, the method supports more values of a quantity of sequences. In addition, the any two adjacent second sub-sequence sets are the same, or the second sequences with the same index in the any two adjacent second sub-sequence sets form the GCP, and low ambiguity zones of ambiguity functions corresponding to a plurality of sequences are affected by an arrangement manner of the plurality of sequences. Therefore, an arrangement manner of the N first sequences can be flexibly adjusted by designing a relationship between second sub-sequence sets, to flexibly adjust low ambiguity zones of ambiguity functions corresponding to the N first sequences. In other words, in the solution of this application, sequence diversity is increased, and sequence design flexibility is improved, so that the N first sequences can be flexibly designed based on a sensing requirement, and detection performance can be improved.

The technical solutions in embodiments of this application may be applied to various communication systems. The communication system may be a 3rd generation partnership project (3rd generation partnership project, 3GPP) communication system, for example, a 4th generation (4th generation, 4G) system, a 5th generation (5th generation, 5G) mobile communication system, an evolved mobile communication system after 5G such as a 6th generation (6th generation, 6G) system, a vehicle to everything (vehicle to everything, V2X) system, a device-to-device (device-to-device, D2D) communication system, a machine-to-machine (machine-to-machine, M2M) communication system, an internet of things (internet of things, IoT) system, a narrowband internet of things (narrowband internet of things, NB-IoT) system, another next-generation communication system, an integrated sensing and communication system, a satellite communication system, or the like. The communication system may alternatively be a non-3GPP communication system, for example, a wireless local area network (wireless local area network, WLAN) system such as a wireless fidelity (wireless fidelity, Wi-Fi) system. This is not limited.

The technical solutions in embodiments of this application may be applied to various communication scenarios, for example, a sensing scenario and a downlink synchronization scenario.

The foregoing communication systems and communication scenarios to which this application is applicable are merely examples for description. Communication systems and communication scenarios to which this application is applicable are not limited thereto, and the foregoing descriptions do not constitute any limitation on the solutions of this application.

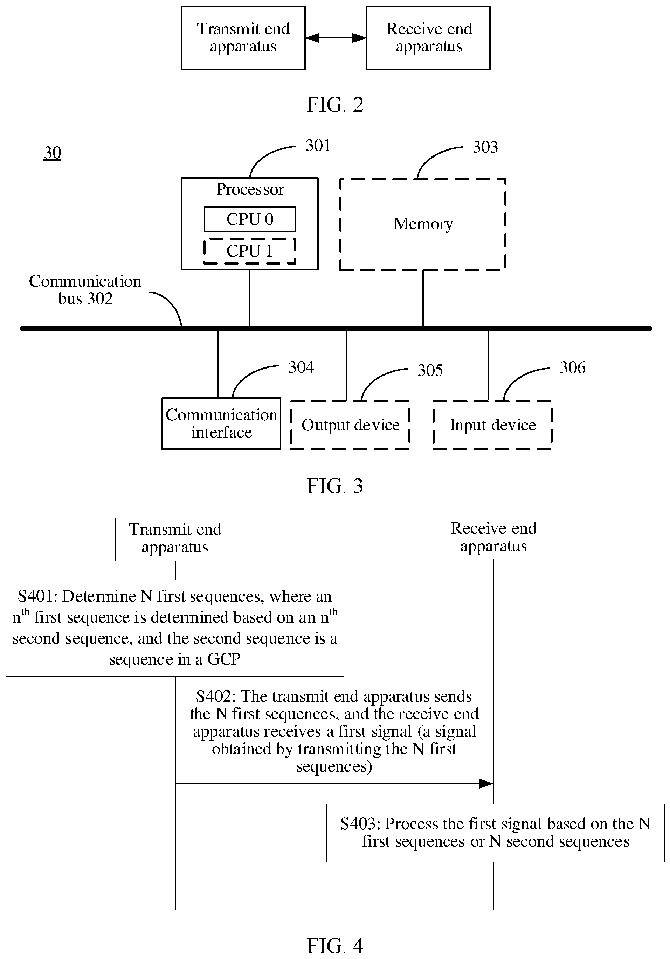

FIG. 2 is a diagram of a structure of a communication system according to this application. The communication system includes a transmit end apparatus and a receive end apparatus. The transmit end apparatus is configured to send a sequence, and the receive end apparatus is configured to: receive a signal formed by transmitting the sequence, and process the signal.

In a possible implementation, the transmit end apparatus and the receive end apparatus may be a same apparatus. For example, the transmit end apparatus and the receive end apparatus may be a same network device or a same terminal device. In this case, the sequence sent by the transmit end apparatus arrives at the receive end apparatus after being reflected by a target object; and the receive end apparatus may process the received signal, to detect a location and/or a speed of the target object.

In another possible implementation, the transmit end apparatus and the receive end apparatus may be different apparatuses. For example, one of the transmit end apparatus and the receive end apparatus is a network device, and the other is a terminal device. Alternatively, the transmit end apparatus and the receive end apparatus are two different terminal devices or two different network devices. This is not specifically limited in this application. In this scenario, a target object may be understood as the transmit end apparatus or the receive end apparatus. The sequence sent by the transmit end apparatus arrives at the receive end apparatus after being transmitted. The receive end apparatus may process the received signal, to detect a location of the receive end apparatus relative to the transmit end apparatus and/or a relative movement speed between the receive end apparatus and the transmit end apparatus.

For example, in a downlink synchronization scenario, the transmit end apparatus may be a network device, and the receive end apparatus may be a terminal device. The network device may send a plurality of sequences. The terminal device may receive signals formed by transmitting the plurality of sequences, process the signals to detect a relative location between the terminal device and the network device, so as to determine a transmission delay between the terminal device and the network device based on the relative location, and perform downlink synchronization based on the transmission delay.

Optionally, the terminal device in embodiments of this application may be a user-side device configured to implement a wireless communication function, for example, a terminal or a chip that can be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a robot, a smart point of sale (point of sale, POS) machine, customer premises equipment (customer premises equipment, CPE) or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in IoT, for example, a terminal (for example, an internet of vehicles device) in V2X, a terminal in D2D communication, or a terminal in M2M communication. The terminal may be mobile or fixed.

Optionally, the network device in embodiments of this application is a device that connects a terminal device to a wireless network. The network device may be a node in a radio access network (radio access network, RAN), or may be a base station, and may be referred to as a radio access network node (or device).

For example, the network device may include an evolved base station (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in an NR system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in an NTN, that is, may be deployed on an aerial platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that implements a base station function in IoT, for example, a device that implements the base station function in uncrewed aerial vehicle communication, V2X, D2D, or machine-to-machine (machine-to-machine, M2M).

Alternatively, the network device may be a module or unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device or a module of the network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

Optionally, the CU and the DU may be obtained through division based on protocol layers of the wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are set on the CU, and functions of a protocol layer (for example, a radio link control (radio link control, RLC) layer, a media access control (media access control, MAC) layer, or a physical (physical, PHY) layer) below the PDCP layer are set on the DU. For another example, functions of a protocol layer above a PDCP layer are set on the CU, and functions of the PDCP layer and a protocol layer below the PDCP layer are set on the DU. This is not limited.

Division into processing functions of the CU and the DU based on the protocol layers is merely an example, and another division manner may also be used. For example, the CU or the DU may have functions of more protocol layers through division. For another example, the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU.

Optionally, the base station in embodiments of this application may include various forms of base stations, for example, a macro base station, a micro base station (also referred to as a small cell), a relay station, an access point, a home base station, a TRP, a transmission point (transmission point, TP), a mobile switching center, and the like. This is not specifically limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that with evolution of a network architecture and emergence of new service scenarios, the technical solutions provided in embodiments of this application are also applicable to similar technical problems.

Optionally, related functions of the transmit end apparatus or the receive end apparatus in this application may be implemented by using a communication apparatus 30 in FIG. 3. With reference to FIG. 3, the communication apparatus 30 includes one or more processors 301. Further, the communication apparatus 30 may further include a communication bus 302 and at least one communication interface (in FIG. 3, that the communication apparatus 30 includes a communication interface 304 and one processor 301 is merely used as an example for description). Optionally, the communication apparatus 30 may further include a memory 303.

The processor 301 may be a general-purpose central processing unit (central processing unit, CPU), a microprocessor, an application-specific integrated circuit (application-specific integrated circuit, ASIC), one or more integrated circuits configured to control program execution in solutions of this application, or a processing core configured to process data (for example, computer program instructions). The processor may be a single-core (single-CPU) processor, or may be a multi-core (multi-CPU) processor.

During specific implementation, in an embodiment, the processor 301 may include one or more CPUs, for example, a CPU 0 and a CPU 1 in FIG. 3.

The communication bus 302 may be a peripheral component interconnect (peripheral component interconnect, PCI) bus or an extended industry standard architecture (extended industry standard architecture, EISA) bus, or the like. The bus may be classified as an address bus, a data bus, a control bus, or the like. For ease of representation, only one thick line is used to represent the bus in FIG. 3, but this does not mean that there is only one bus or only one type of bus. The communication bus 302 is configured to connect different components in the communication apparatus 30, so that the different components in the communication apparatus 30 may communicate and interact with each other.

The communication interface 304 may be a transceiver module configured to communicate with another device or a communication network. The communication network may be, for example, an ethernet (Ethernet), a radio access network (radio access network, RAN), or a wireless local area network (wireless local area network, WLAN). For example, the communication interface 304 may be an apparatus such as a transceiver or a transceiver machine. Alternatively, the communication interface 304 may be a transceiver circuit located in the processor 301, and is configured to implement signal input and signal output of the processor.

The memory 303 may be an apparatus having a storage function. For example, the memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 303 is not limited thereto. The memory may exist independently, and is connected to the processor through the communication bus 302. The memory may alternatively be integrated with the processor.

For example, the memory 303 is configured to store computer-executable instructions for performing the solutions of this application, and the processor 301 controls execution. The processor 301 is configured to execute the computer-executable instructions stored in the memory 303, to implement the method provided in embodiments of this application.

Alternatively, optionally, in this embodiment of this application, the processor 301 may perform functions related to processing in the method provided in the following embodiment in this application, and the communication interface 304 is responsible for communication with another device or a communication network. This is not specifically limited in this embodiment of this application.

Optionally, the computer-executable instructions in embodiments of this application may also be referred to as application program code. This is not specifically limited in embodiments of this application.

During specific implementation, in an embodiment, the communication apparatus 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensing device.

It should be noted that the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

With reference to the accompanying drawings, the following describes in detail the sequence transmission method provided in embodiments of this application. It may be understood that in embodiments of this application, the transmit end apparatus or the receive end apparatus may perform some or all of steps in embodiments of this application. These steps or operations are merely examples. In embodiments of this application, other operations or variations of the operations may be further performed. In addition, the steps may be performed in a sequence different from a sequence presented in embodiments of this application, and not all operations in embodiments of this application may be performed.

FIG. 4 shows a sequence transmission method according to this application. With reference to FIG. 4, the sequence transmission method includes the following steps.

S401: A transmit end apparatus determines N first sequences.

N is a positive integer greater than 1. For example, N is a composite number. $N = \prod_{m=0}^{M-1} a_m$ , $a_m$ is a prime number, and M is a positive integer greater than 1. In other words, $a_m$ is a factor of N. Because $a_m$ is a prime number, $a_m$ may also be referred to as a prime factor of N. For example, a sequence formed by sequentially splicing M values of $a_m$ ($m = 0, ...,$ M - 1) may be referred to as a factor sequence $a$, that is, $a = [a_0, a_1, ..., a_{M-1}]$.

It may be understood that when N has at least two different factors, different arrangement manners of M factors correspond to different factor sequences $a$. For example, when N=18, the factor sequence may be $a = [2,3,3]$, $a = [3,2,3]$, or $a = [3,3,2]$. Optionally, for a specific value of N, different factor sequences $a$ may correspond to different N first sequences.

The N first sequences are in one-to-one correspondence with N second sequences. Specifically, an $n^{th}$ first sequence in the N first sequences is determined based on an $n^{th}$ second sequence in the N second sequences, and $n = 0,1, ..., N$ - 1. To be specific, a $0^{th}$ first sequence in the N first sequences is determined based on a $0^{th}$ second sequence in the N second sequences; a $1^{st}$ first sequence in the N first sequences is determined based on a $1^{st}$ second sequence in the N second sequences; and by analogy, a $(N-1)^{th}$ first sequence in the N first sequences is determined based on a $(N-1)^{th}$ second sequence in the N second sequences.

Each of the N second sequences is a sequence in a GCP. In other words, each second sequence is a sequence x or a sequence y in the GCP. Lengths of the sequence x and the sequence y may be represented as L, and L is a positive integer. In other words, any one of the N first sequences is determined based on the sequence x or the sequence y in the GCP.

Optionally, each of the N second sequences is a sequence in a same GCP.

Optionally, the N first sequences may form a first sequence set $\mathbf{s}_1$ , and $\mathbf{S}_1 = \{s_1^0, s_1^1, s_1^2, ..., s_1^{N-1}\}$. $s_1^n$ represents an $n^{th}$ first sequence in the first sequence set $\mathbf{s}_1$, that is, the $n^{th}$ first sequence in the N first sequences, and $n = 0,1, ..., N$ - 1. A length of the first sequence may be represented as $L_1$.

Optionally, the N second sequences may form a second sequence set $\mathbf{s}_2$, and $\mathbf{S}_2 = \{s_2^0, s_2^1, s_2^2, ..., s_2^{N-1}\}$.

$s_2^n$ represents an $n^{th}$ second sequence in the second sequence set $\mathbf{s}_2$, that is, the $n^{th}$ second sequence in the N second sequences, and $n = 0,1, ..., N$ - 1. A length of the second sequence may be represented as $L_2$. Because the second sequence is the sequence x or the sequence y in the GCP, $L_2 = L$.

Optionally, the N first sequences are in one-to-one correspondence with the N second sequences, that is, the first sequence set corresponds to the second sequence set, and the $n^{th}$ first sequence $\mathbf{s}_1^n$ corresponds to the $n^{th}$ second sequence $\mathbf{s}_2^n$ .

For each $a_m$, the N second sequences include $\frac{N}{\prod_{i=-1}^{m} a_i}$ first sub-sequence sets. Each first sub-sequence set includes $a_m$ second sub-sequence sets. Each second sub-sequence set includes $\prod_{i=-1}^{m-1} a_i$ second sequences, $m =$ 0,1, ..., M - 1, and $a_{-1}$ = 1. In each first sub-sequence set, any two adjacent second sub-sequence sets are the same; or second sequences with a same index in any two adjacent second sub-sequence sets form a GCP, in other words, for two second sequences with a same index in any two adjacent second sub-sequence sets, one is a sequence x in a GCP, and the other is a sequence y in the GCP.

In other words, there is a group of values $a_0$, $a_1$, ..., and $a_{M-1}$ that satisfy $N = \prod_{m=0}^{M-1} a_m$ , and $m$ = 0, ... , M - 1. For an $m^{th}$ value $a_m$ in the group of values, the N second sequences may be divided into $\frac{N}{\prod_{i=-1}^{m} a_i}$ first sub-sequence sets, in other words, the N second sequences may be obtained by splicing the $\frac{N}{\prod_{i=-1}^{m} a_i}$ first sub-sequence sets. Each first sub-sequence set includes $\prod_{i=-1}^{m} a_i$ second sequences.

Further, each first sub-sequence set may be divided into $a_m$ second sub-sequence sets, in other words, the first sub-sequence set may be obtained by sequentially splicing the $a_m$ second sub-sequence sets. Each second sub-sequence set includes $\prod_{i=-1}^{m-1} a_i$ second sequences. For the $a_m$ second sub-sequence sets included in the first sub-sequence set, any two adjacent second sub-sequence sets are the same, or second sequences with a same index in any two adjacent second sub-sequence sets form a GCP.

Optionally, that the second sequences with the same index in the any two adjacent second sub-sequence sets form the GCP may include: a second sequence with an index k in a former sub-sequence set is a $1^{st}$ sequence in the GCP, and a second sequence with the index k in a latter sub-sequence set is a $2^{nd}$ sequence in the GCP; or a second sequence with an index k in a former sub-sequence set is a $2^{nd}$ sequence in the GCP, and a second sequence with the index k in a latter sub-sequence set is a $1^{st}$ sequence in the GCP. k is 0 to $\left(\prod_{i=-1}^{m-1} a_i\right) - 1$ .

Optionally, the $\frac{N}{\prod_{i=-1}^{m} a_i}$ first sub-sequence sets may be sequentially numbered from 0 to $\frac{N}{\prod_{i=-1}^{m} a_i} - 1$. For each first sub-sequence set, the $a_m$ second sub-sequence sets may be sequentially numbered from 0 to $a_m$ - **1.** For each second sub-sequence set, the $\prod_{i=-1}^{m-1} a_i$ second sequences may be sequentially numbered from 0 to $\left(\prod_{i=-1}^{m-1} a_i\right) - 1$ .

Optionally, based on division into the foregoing sub-sequence sets, it may be considered that the factor $a_m$ of N corresponds to the $\frac{N}{\prod_{i=-1}^{m} a_i}$ first sub-sequence sets and corresponds to the $a_m$ second sub-sequence sets.

For example, N=18, the factor sequence $\boldsymbol{a}$ = [2,3,3], that is, $a_0$ = 2, $a_1$ = 3, and $a_2$ = 3 , and the second sequence set (that is, the N second sequences) is $\mathbf{s}_2$ = {x, y, y, x, x, y, x, y, y, x, x, y,x, y, y, x, x, y}.

For $a_0$, the second sequence set includes $\frac{N}{\prod_{i=-1}^{0} a_i} = 9$ first sub-sequence sets, and the nine first sub-sequence sets are sequentially {x, y}, {y, x}, {x, y}, {x, y}, {y, x}, {x, y}, {x, y}, {y, x}, and {x, y} . Each first sub-sequence set includes $a_0$ = 2 second sub-sequence sets. For example, two second sub-sequence sets included in a $0^{th}$ first sub-sequence set {x, y} are sequentially {x} and {y}, and two second sub-sequence sets included in a $1^{st}$ first sub-sequence set {y, x} are sequentially {y} and {x}. It can be learned that, for $a_0$ = 2, second sequences with a same index in any two adjacent second sub-sequence sets in each first sub-sequence set form a GCP.

For $a_1$, the second sequence set includes $\frac{N}{\prod_{i=-1}^{1} a_i} = 3$ first sub-sequence sets, and the three first sub-sequence sets are sequentially $\{x, y, y, x, x, y\}$, $\{x, y, y, x, x, y\}$, and $\{x, y, y, x, x, y\}$. Each first sub-sequence set includes $a_1 = 3$ second sub-sequence sets. For example, three second sub-sequence sets included in a $0^{th}$ first sub-sequence set $\{x, y, y, x, x, y\}$ are sequentially $\{x, y\}$, $\{y, x\}$, and $\{x, y\}$.

In the three second sub-sequence sets, in a $0^{th}$ second sub-sequence set $\{x, y\}$, a second sequence with an index 0 is the sequence x, and a second sequence with an index 1 is the sequence y; in a $1^{st}$ second sub-sequence set $\{y, x\}$, a second sequence with the index 0 is the sequence y, and a second sequence with the index 1 is the sequence x; and in a $2^{nd}$ second sub-sequence set $\{x, y\}$, a second sequence with the index 0 is the sequence x, and a second sequence with the index 1 is the sequence y. For the $0^{th}$ second sub-sequence set and the $1^{st}$ second sub-sequence set that are adjacent to each other, two second sequences with the index 0 form a GCP, and two second sequences with the index 1 form a GCP. For the $1^{st}$ second sub-sequence set and the $2^{nd}$ second sub-sequence set, there is a similar feature. That is, for $a_1 = 3$, second sequences with a same index in any two adjacent second sub-sequence sets in each first sub-sequence set form a GCP.

For $a_2$, the second sequence set includes $\frac{N}{\prod_{i=-1}^{2} a_i} = 1$ first sub-sequence set, and the first sub-sequence set is the same as the second sequence set. The first sub-sequence set includes $a_2 = 3$ second sub-sequence sets, and the three second sub-sequence sets are sequentially $\{x, y, y, x, x, y\}$, $\{x, y, y, x, x, y\}$, and $\{x, y, y, x, x, y\}$. It can be learned that, for $a_2 = 3$, any two adjacent second sub-sequence sets in each first sub-sequence set are the same.

Optionally, the N first sequences or the N second sequences corresponding to the N first sequences may be autonomously determined by the transmit end apparatus, or may be indicated (or configured) by another device (referred to as a third-party device) to the transmit end apparatus by using signaling. The third-party device may be, for example, a network device.

For example, the transmit end apparatus may preconfigure a plurality of sequence sets (each sequence set includes a plurality of first sequences or second sequences), and the third-party device may send, to the transmit end apparatus, an index of the first sequence set including the N first sequences, or an index of the second sequence set including the N second sequences, to indicate the N first sequences. Alternatively, when one value of N corresponds to one sequence set, the third-party device may send or indicate a value of N to the transmit end apparatus, to indicate the N first sequences by using the value of N.

S402: The transmit end apparatus sends the N first sequences. Correspondingly, a receive end apparatus receives a first signal.

Optionally, that the transmit end apparatus sends the N first sequences may include: The transmit end apparatus sends a signal (denoted as a second signal) generated based on each of the N first sequences. For example, when the transmit end apparatus is a network device, the second signal may be a reference signal.

Optionally, the N first sequences are mapped and sent in time domain.

Optionally, the N first sequences may be sequentially sent in N consecutive first time units (time units). For example, the $n^{th}$ first sequence in the N first sequences is sent in an $n^{th}$ time unit in the N consecutive first time units. The N consecutive first time units have same duration.

For example, the signal (namely, the second signal) generated based on each first sequence is a time domain signal, and an $n^{th}$ second signal generated based on the $n^{th}$ first sequence is sent in the $n^{th}$ first time unit corresponding to the first sequence. Second signals generated based on the N first sequences have same duration.

Optionally, duration (or referred to as a length) of a time unit may be represented as $L_{unit} \times P \times T_s$. $T_s$ represents a unit of time (or referred to as a sampling interval). $T_s$ may be determined based on a subcarrier spacing. For example, when the subcarrier spacing is 15 kilohertz (kHz), $T_s$ may be $1/(2048 \times 15000)$ seconds (s). $P$ is a positive integer. For example, $P$ may be 1 or 2. For example, $P$ may be understood as a multiple of upsampling.

$L_{unit}$ may be understood as a quantity of discrete points (or referred to as sampling points) in the time unit, and a time interval between any two adjacent discrete points is $P \times T_s$. In other words, $L_{unit}$ discrete points (or discrete time domain positions) may be obtained by dividing (or sampling) the time unit at an interval of $P \times T_s$.

A length of the $n^{th}$ first time unit is $L_n^{unit}$, and the N consecutive first time units have the same duration.

Therefore, $L_{unit} = L_n^{unit}$.

Optionally, each of the N consecutive first time units includes at least one symbol. The symbol may be a single carrier (single carrier) symbol, may be a single carrier quadrature amplitude modulation (single carrier quadrature amplitude modulation, SC-QAM) symbol, or may be a single carrier frequency division multiple access (single carrier frequency division multiple access, SC-FDMA) symbol.

Optionally, when the symbol is a single carrier symbol or an SC-QAM symbol, the transmit end apparatus may perform at least one of upsampling (upsampling), filtering, digital-to-analog conversion (digital-to-analog conversion), and up-conversion (up-conversion) on the N first sequences, to obtain the second signals.

For example, the $n^{\text{th}}$ first time unit may include $L_n^{unit}$ single carrier symbols or $L_n^{unit}$ SC-QAM symbols. One value (for example, one complex number value) may be sent on each single carrier symbol or each SC-QAM symbol. Duration of each single carrier symbol or each SC-QAM symbol may be $P \times T_s$. $L_n^{unit}$ is a positive integer. In this case, a time domain signal of each single carrier symbol (or each SC-QAM symbol) may be obtained by performing at least one of upsampling, filtering, digital-to-analog conversion, and up-conversion based on one value sent on the single carrier symbol.

For example, one value of a first sequence may be sent on one single carrier symbol in the $L_n^{unit}$ single carrier symbols, in other words, a first sequence with a length $L_1$ may be sent on $L_1$ single carrier symbols in the $L_n^{unit}$ single carrier symbols. The second signal includes time domain signals of the $L_1$ single carrier symbols corresponding to the first sequence.

Optionally, when the symbol is an SC-FDMA symbol, the transmit end apparatus may perform operations of Fourier transform, resource mapping, and inverse Fourier transform on the N first sequences, to obtain the second signals.

In a possible example, the $n^{\text{th}}$ first time unit includes one SC-FDMA symbol, and duration of the SC-FDMA symbol is $L_{n'}^{unit} \times P \times T_s$; the $n^{\text{th}}$ first time unit includes one SC-FDMA symbol and a cyclic prefix (cyclic prefix, CP) of the SC-FDMA symbol; or the $n^{\text{th}}$ first time unit may include one SC-FDMA symbol and a zero padding (zero padding, ZP) of the SC-FDMA symbol.

When the length of the $n^{\text{th}}$ first time unit is equal to the length of the first sequence, duration of the second signal is the same as duration of the first time unit. In this case, the second signal is an SC-FDMA symbol, and the $n^{\text{th}}$ second signal may be obtained by performing Fourier transform (Fourier transform) and inverse Fourier transform (inverse Fourier transform) based on the $n^{\text{th}}$ first sequence; or the $n^{\text{th}}$ second signal may be obtained by performing Fourier transform, resource mapping, and inverse Fourier transform based on the $n^{\text{th}}$ first sequence.

A quantity of points of Fourier transform and a quantity of points of inverse Fourier transform may be the same or different. This is not limited in this application. The quantity of points of Fourier transform may refer to a length of discrete Fourier transform, that is, a quantity of output values of discrete Fourier transform; and the quantity of points of inverse Fourier transform may refer to a length of inverse discrete Fourier transform, that is, a quantity of output values of the inverse discrete Fourier transform.

In another possible example, the $n^{\text{th}}$ first time unit may include $N_{scfdma}$ SC-FDMA symbols, and duration of one SC-FDMA symbol is $L_{n'}^{unit} \times P \times T_s / N_{scfdma}$; the $n^{\text{th}}$ first time unit includes $N_{scfdma}$ SC-FDMA symbols and $N_{scfdma}$ cyclic prefixes corresponding to the $N_{scfdma}$ SC-FDMA symbols; or the $n^{\text{th}}$ first time unit includes $N_{scfdma}$ SC-FDMA symbols and $N_{scfdma}$ zero paddings corresponding to the $N_{scfdma}$ SC-FDMA symbols. $N_{scfdma}$ is a positive integer greater than 1.

For example, a first sequence with a length $L_1$ may be divided into $N_{scfdma}$ first sub-sequences, and each first sub-sequence includes $L_{sub,1}$ elements. The $N_{scfdma}$ first sub-sequences include $N_{scfdma}L_{sub,1}$ elements in total, and $N_{scfdma}L_{sub,1} \geq L_1$. First $L_1$ elements in a sequence obtained by sequentially splicing the $N_{scfdma}$ first sub-sequences form the first sequence.

When $N_{scfdma}L_{sub,1} > L_1$, last $N_{scfdma}L_{sub,1} - L_1$ elements of a last first sub-sequence in the $N_{scfdma}$ first sub-sequences are 0. $(N_{scfdma} - 1)L_{sub,1} < L_1$.

The $N_{scfdma}$ SC-FDMA symbols in the first time unit are in one-to-one correspondence with the $N_{scfdma}$ first sub-sequences. Specifically, an $i^{\text{th}}$ SC-FDMA symbol may be obtained by performing Fourier transform (Fourier transform) and inverse Fourier transform (inverse Fourier transform) based on an $i^{\text{th}}$ first sub-sequence; or may be obtained by performing Fourier transform, resource mapping, and inverse Fourier transform based on an $i^{\text{th}}$ first sub-sequence. $i = 0,1, ..., N_{scfdma} - 1$.

The first signal received by the receive end apparatus may be understood as a signal obtained by transmitting the N first sequences (or the N second signals).

Optionally, when the transmit end apparatus and the receive end apparatus are a same device, the first signal may be understood as echo signals of the second signals.

S403: The receive end apparatus processes the first signal based on the N first sequences or the N second sequences.

Optionally, the receive end apparatus may sample the first signal to obtain a receiving sequence. The receiving sequence may be understood as the N received first sequences. Then, an ambiguity function of the N first sequences (or the N second sequences) and the receiving sequence is calculated, to perform detection or sensing according to the ambiguity function.

For example, when the transmit end apparatus and the receive end apparatus are a same network device, the network device may detect a location and/or a speed of a target object (for example, a terminal device) according to the ambiguity function.

When the transmit end apparatus is a network device and the receive end apparatus is a terminal device, the terminal device may detect a transmission delay between the terminal device and the network device according to the ambiguity function, to perform downlink synchronization based on the transmission delay.

Optionally, when the transmit end apparatus and the receive end apparatus are different devices, the transmit end apparatus may indicate, to the receive end apparatus, the N first sequences sent by the transmit end apparatus or the second sequences corresponding to the N first sequences. For example, a plurality of sequence sets may be preconfigured in the transmit end apparatus and the receive end apparatus, and the transmit end apparatus may send, to the receive end apparatus, an index of the first sequence set including the N first sequences, to indicate the N first sequences. Alternatively, when one value of N corresponds to one sequence set, the transmit end apparatus may send or indicate a value of N to the receive end apparatus, to indicate the N first sequences by using the value of N.

Based on the foregoing solution, $N = \prod_{m=0}^{M-1} a_m$, and $a_m$ is a prime number. Therefore, compared with the manner 1, this application supports more values of a quantity of sequences, and therefore supports flexible selection of appropriate values of N based on different low ambiguity zone requirements and detection precision requirements. In addition, the any two adjacent second sub-sequence sets are the same, or the second sequences with the same index in the any two adjacent second sub-sequence sets form the GCP. Therefore, this application supports flexible design of relationships between second sub-sequence sets based on different low ambiguity zone requirements and detection precision requirements. In other words, in the solution of this application, sequence design diversity is increased, and sequence design flexibility is improved, so that flexible design of the N first sequences based on an actual requirement can be supported, and detection performance can be improved.

For example, the second sequence set (that is, the N second sequences) may be one item in Table 1, in other words, a possible value of the second sequence set may be some or all rows in Table 1.

Table 1

| N | Second sequence set $s_2$ |
|---|---|
| 10 | {x, y, y, x, x, y, y, x, x, y} |
| 12 | {x, y, y, x, y, x, x, y, x, y, y, x} |
| 12 | {x,y, x, x,y, x,y, x, y,y, x,y} |
| 14 | {x,y,y,x,x,y,y,x,x,y,y,x,x,y} |
| 16 | {x, y, y, x, x, y, y, x, x, y, y, x, x, y, y, x} |
| 16 | {x, y, y, x, y, x, x, y, x, y, y, x, y, x, x, y} |
| 18 | {x, y, y, x, x, y, x, y, y, x, x, y, x, y, y, x, x, y} |
| 18 | {x, y, y, x, x, y, y, x, x, y, y, x, x, y, y, x, x, y} |
| 18 | {x, y, x, x, y, x, x, y, x, y, x, y, x, y, y, x, y} |
| 20 | {x, y, y, x, y, x, x, y, x, y, y, x, y, x, x, y, x, y, y, x} |
| 20 | {x, y, y, x, x, y, y, x, x, y, x, y, y, x, x, y, y, x, x, y} |
| 22 | {x, y, y, x, x,y, y, x, x, y, y, x, x, y, y, x, x, y, y, x, x, y} |
| 24 | {x, y, y, x, x, y, x, y, y, x, x, y, x, y, y, x, x, y, x, y, y, x, x, y} |
| 24 | {x, y, x, x, y, x, y, x, y, y, x, y, x, y, x, x, y, x, y, x, y, y, x, y} |

Optionally, when the transmit end apparatus is a terminal device, in step S401, the network device may indicate the second sequence set to the transmit end apparatus by using signaling. The signaling may be RRC signaling or downlink control signaling (downlink control information, DCI). For example, the 14 possible values of the second sequence set in Table 1 may be indicated by using 4-bit RRC signaling. For example, 14 of 16 possible values of the four bits may be in one-to-one correspondence with the 14 possible values of the second sequence set shown in Table 1. The network device may send a specific value of the four bits to the transmit end apparatus. In this case, the second sequence set indicated by the network device is a second sequence set corresponding to the value.

Optionally, all possible values of the second sequence set may be some or all possible values in Table 1.

It should be noted that, this application does not limit that each second sequence set in Table 1 has a corresponding factor sequence *a*. In other words, for each second sequence set shown in Table 1, the factor sequence *a* may exist or may not exist. For example, when the factor sequence *a* exists, factor sequences *a* corresponding to second sequence sets shown in Table 1 from top to bottom may be separately [2, 5], [2, 2, 3], [3, 2, 2], [2, 7], [2, 2, 2, 2], [2, 2, 2, 2], [2, 3, 3], [2, 3, 3], [3, 3, 2], [2, 2, 5], [2, 5, 2], [2, 11], [2, 3, 2, 2], and [3, 2, 2, 2].

In some embodiments, the N second sequences may include $\left\lfloor \frac{N}{2} \right\rfloor$ sequence groups, there are at least two different sequence groups in the $\left\lfloor \frac{N}{2} \right\rfloor$ sequence groups, and ⌊ ⌋ indicates rounding down. When N is an even number, the $\left\lfloor \frac{N}{2} \right\rfloor$ sequence groups include the N second sequences. When N is an odd number, the $\left\lfloor \frac{N}{2} \right\rfloor$ sequence groups include first N-1 second sequences in the N second sequences.

In other words, every two second sequences in the N second sequences may be sequentially grouped into one group at a granularity of 2, to obtain the $\left\lfloor \frac{N}{2} \right\rfloor$ sequence groups. When N is an odd number, a last second sequence does not participate in sequence group division.

For example, N is equal to 10, and the N second sequences are {x, y, y, x, x, y, y, x, x, y}. The 10 second sequences may be divided into the following five sequence groups: {x, y}, {y, x}, {x, y}, {y, x}, and {x, y}. There are different sequence groups in the five sequence groups.

In other words, the N second sequences are not obtained by repeating first two second sequences in the N second sequences.

For example, N is equal to 8. If the first two second sequences are separately the sequence x and the sequence y in GCP sequences, the N second sequences are not obtained by repeating {x, y}, that is, the N second sequences are not {x, y, x, y, x, y, x, y}.

Optionally, when N is an odd number, that the N second sequences are not obtained by repeating the first two second sequences in the N second sequences may be understood as follows: The first N-1 second sequences in the N second sequences are not obtained by repeating the first two second sequences, or the last second sequence in the N second sequences is not a 1st second sequence in the N second sequences.

For example, N is equal to 9. If the first two second sequences are separately the sequence x and the sequence y in GCP sequences, the first N-1 second sequences in the N second sequences are not obtained by repeating {x, y}, and the last second sequence is not the sequence x, that is, the N second sequences are not {x, y, x, y, x, y, x, y, x}.

Based on this solution, because there are at least two different sequence groups in the $\left\lfloor \frac{N}{2} \right\rfloor$ sequence groups included in the N second sequences, the N second sequences are not generated by repeating the first two second sequences, so that a problem that a low ambiguity zone of an ambiguity function is not distinct due to repetition of the first two second sequences can be avoided. In other words, based on this design of the N second sequences, under a specific threshold, there may be a distinct low ambiguity zone of the ambiguity function, so that detection performance can be improved compared with the manner 2.

In some embodiments, there is at least one odd number $a_j$ in the factor sequence a, second sequences with a same index in any two adjacent second sub-sequence sets in each first sub-sequence set corresponding to $a_j$ form the GCP, and $j$ is an integer from 0 to M-1.

In other words, there is at least one odd number $a_j$ for which the N second sequences include $\frac{N}{\prod_{i=-1}^{j} a_i}$ first sub-sequence sets, each first sub-sequence set includes $a_j$ second sub-sequence sets, and each second sub-sequence set includes $\prod_{i=-1}^{j-1} a_i$ second sequences. In addition, second sequences with a same index in any two adjacent second sub-sequence sets in each first sub-sequence set form the GCP.

For example, in the example shown in step S401 in which N=18, the factor sequence *a* = [2,3,3], that is, $a_0$ = 2, $a_1$ = 3, and $a_2$ = 3, and the N second sequences are {x, y, y, x, x, y, x, y, y, x, x, y, x, y, y, x, x, y}, j=1, and $a_j$ = 3.

Based on this solution, because there is at least one odd number $a_j$, the quantity N of sequences may not be limited to including only a factor 2, and more values of the quantity of sequences can be supported. In addition, although N may have an odd number factor in the manner 2, after sub-sequence set division is performed in the manner in step S401, in a plurality of second sub-sequence sets included in a first sub-sequence set corresponding to the odd number factor, any two adjacent second sub-sequence sets are the same, in other words, a relationship between the any two adjacent second sub-sequence sets is fixed and cannot be flexibly adjusted. In the foregoing design, in a plurality of second sub-sequence sets included in the first sub-sequence set corresponding to the odd number factor $a_j$, the second sequences with the same index in the any two adjacent second sub-sequence sets form the GCP. In other words, based on this design, compared with the manner 2, sequence design diversity is increased, and sequence design flexibility is improved, so that flexible design of a plurality of sequences based on an actual requirement can be supported, and detection performance can be improved.

In some embodiments, there is at least one $a_k$ in the factor sequence **a,** any two adjacent second sub-sequence sets in each first sub-sequence set corresponding to $a_k$ are the same, and $k$ is an integer from 1 to M-1.

In other words, there is at least one integer $k$ in 1 to M-1; and for $a_k$ corresponding to the integer $k$, the N second sequences include $\frac{N}{\prod_{i=-1}^{k} a_i}$ first sub-sequence sets, each first sub-sequence set includes $a_k$ second sub-sequence sets, and each second sub-sequence set includes $\prod_{i=-1}^{k-1} a_i$ second sequences. In addition, any two adjacent second sub-sequence sets in each first sub-sequence set are the same.

For example, in the example shown in step S401 in which N=18, the factor sequence **a** = [2,3,3] , that is, $a_0 = 2$, $a_1 = 3$, *and* $a_2 = 3$ , and the N second sequences are {*x, y, y, x, x, y, x, y, y, x, x, y, x, y, y, x, x, y*}, $k$=2, and $a_k$ = 3.

When the quantity N of sequences includes only a factor 2 (for example, when N=8, three factors included in N are all 2), in a plurality of sequences determined in the manner 1, after sub-sequence set division is performed in the manner in step S401, in two second sub-sequence sets included in a first sub-sequence set corresponding to a specific factor 2, second sequences with a same index in any two adjacent second sub-sequence sets form the GCP, in other words, a relationship between the any two adjacent second sub-sequence sets is fixed and cannot be flexibly adjusted. In the foregoing design of this application, in a factor other than a 1st factor, there is at least one factor for which any two adjacent second sub-sequence sets in a first sub-sequence set corresponding to the factor are the same. In other words, based on this design, compared with the manner 1, sequence design diversity is increased, and sequence design flexibility is improved, so that flexible design of a plurality of sequences based on an actual requirement can be supported, and detection performance can be improved.

In some embodiments, **a** = [$a_0$, ..., $a_{M-1}$], there is at least one $a_k$ in **a,** and any two adjacent second sub-sequence sets in each first sub-sequence set corresponding to $a_k$ are the same; and there is at least one $a_q$ in the sequence **a,** and second sequences with a same index in any two adjacent second sub-sequence sets in each first sub-sequence set corresponding to $a_q$ form the GCP. $k$ and $q$ are integers from 1 to M-1, and M is greater than 2.

For example, in the example shown in step S401 in which N=18, the factor sequence **a** = [2,3,3] , that is, $a_0 = 2$, $a_1 = 3$, *and* $a_2 = 3$ , and the N second sequences are {*x, y, y, x, x, y, x, y, y, x, x, y, x, y, y, x, x, y*}, $k$=2, $a_k$ = 3, $q$=1, and $a_q$ = 3.

Based on this solution, the quantity N of sequences may include at least three factors, the quantity N of sequences may not be limited to include only a factor 2, and more values of the quantity of sequences can be supported. In factors other than a 1st factor, there is at least one factor for which any two adjacent second sub-sequence sets in a first sub-sequence set corresponding to the factor are the same; and there is at least one factor for which second sequences with a same index in any two adjacent second sub-sequence sets in a first sub-sequence set corresponding to the factor form the GCP. In other words, based on this design, compared with the solution in which a plurality of sequences are determined based on a PTM sequence, sequence design diversity is increased, and sequence design flexibility is improved, so that flexible design of a plurality of sequences based on an actual requirement can be supported, and detection performance can be improved.

The foregoing describes appearance features of the N second sequences from a macroscopic perspective. The following describes a manner of determining the N second sequences.

Optionally, the N second sequences correspond to a first extension sequence $s_{ext}$. The first extension sequence includes N elements, and an nth element is denoted as $s_{ext}(n)$. When the nth element in the first extension sequence is a first value, the nth second sequence in the N second sequences is the sequence x in the GCP; or when the nth element in the first extension sequence is a second value, the nth second sequence in the N second sequences is the sequence y in the GCP. $n = 0,1, ...,N - 1$.

In other words, the N second sequences are in one-to-one correspondence with the N elements in the first extension sequence, and the N second sequences may be determined by determining values of the N elements in the first extension sequence.

The first value and the second value are two different values. For example, the first value and the second value may be respectively 1 and -1, -1 and 1, 0 and 1, or 1 and 0. Certainly, the first value and the second value may alternatively be other values. For example, the first value and the second value are respectively 1 and 5.

For example, the first value is represented as A, and the second value is represented as B. When N=18, if the first extension sequence is $s_{ext}$ = [A, B, B, A, A, B, A, B, B, A, A, B, A, B, B, A, A, B], the N second sequences are {*x, y, y, x, x, y, x, y, y, x, x, y, x, y, y, x, x, y*}. When the first value and the second value are respectively 1 and -1, the first extension sequence is $s_{ext}$ = [1, -1, -1, 1, 1, -1, 1, -1, -1, 1, 1, -1, 1, -1, -1, 1, 1, -1]. When the first value and the second value are respectively 0 and 1, the first extension sequence is $s_{ext}$ = [0,1, 0,1, 0,1, 0, 1, 0,1, 0, 1, 0,1, 0, 1, 1].

Optionally, the first extension sequence may include $\left\lfloor \frac{N}{2} \right\rfloor$ element groups, and there are at least two different element groups in the $\left\lfloor \frac{N}{2} \right\rfloor$ element groups. When N is an even number, the $\left\lfloor \frac{N}{2} \right\rfloor$ element groups include the N elements in the first sequence. When N is an odd number, the $\left\lfloor \frac{N}{2} \right\rfloor$ element groups include first N-1 elements in the first extension sequence.

In other words, every two elements in the N elements in the first extension sequence may be sequentially grouped into one group at a granularity of 2, to obtain the $\left\lfloor \frac{N}{2} \right\rfloor$ element groups. When N is an odd number, a last element in the first extension sequence does not participate in element group division.

For example, N is equal to 10, and the first extension sequence is $s_{ext}$ = [1, -1, -1, 1, 1, -1, -1, 1, 1, -1]. The 10 elements in the first extension sequence may be divided into the following five element groups: [1, -1], [-1, 1], [1, -1], [-1, 1], and [1, -1]. There are different element groups in the five element groups.

In other words, the first extension sequence is not obtained by repeating first two elements in the first extension sequence. For example, N is equal to 8. If the first two elements in the first extension sequence are respectively 1 and -1, the first extension sequence is not obtained by repeating [1, -1], that is, the first extension sequence is not [1, -1, 1, -1, 1, -1, 1, -1, 1, -1].

Optionally, when N is an odd number, that the first extension sequence is not obtained by repeating the first two elements in the first extension sequence may be understood as follows: The first N-1 elements in the first extension sequence are not obtained by repeating the first two elements, or the last element in the first extension sequence is not a 1st element in the first extension sequence.

For example, N is equal to 9. If the first two elements in the first extension sequence are respectively 1 and -1, the first N-1 elements in the first extension sequence are not obtained by repeating [1, -1], or the last element is not 1, that is, the first extension sequence is not [1, -1, 1, -1, 1, -1, 1, -1, 1, -1, 1].

Optionally, there are at least two different element groups in the $\left\lfloor \frac{N}{2} \right\rfloor$ element groups, so that there may be at least two different sequence groups in the $\left\lfloor \frac{N}{2} \right\rfloor$ sequence groups included in the N second sequences.

For example, the first value and the second value are respectively 1 and -1. In some values of N, some first extension sequences provided in this application may be shown in Table 2.

Table 2

| N | First extension sequence $s_{ext}$ |
|---|---|
| 10 | [1, -1, -1, 1, 1, -1, -1, 1, 1, -1] |
| 12 | [1, -1, -1, 1, -1, 1, 1, -1, 1, -1, -1, 1] |
| 12 | [1, -1, 1, 1, -1, 1, -1, 1, -1, -1, 1, -1] |
| 14 | [1, -1, -1, 1, 1, -1, -1, 1, 1, -1, -1, 1, 1, -1] |
| 16 | [1, -1, -1, 1, 1, -1, -1, 1, 1, -1, -1, 1, 1, -1, -1, 1] |
| 16 | [1, -1, -1, 1, -1, 1, 1, -1, 1, -1, -1, 1, -1, 1, 1, -1] |
| 18 | [1, -1, -1, 1, 1, -1, 1, -1, -1, 1, 1, -1, 1, -1, -1, 1, 1, -1] |
| 18 | [1, -1, -1, 1, 1, -1, -1, 1, 1, -1, -1, 1, 1, -1, -1, 1, 1, -1] |
| 18 | [1, -1, 1, 1, -1, 1, 1, -1, 1, -1, 1, -1, -1, 1, -1, -1, 1, -1] |
| 20 | [1, -1, -1, 1, -1, 1, 1, -1, 1, -1, -1, 1, -1, 1, 1, -1, 1, -1, -1, 1] |
| 20 | [1, -1, -1, 1, 1, -1, -1, 1, 1, -1, 1, -1, -1, 1, 1, -1, -1, 1, 1, -1] |
| 22 | [1, -1, -1, 1, 1, -1, -1, 1, 1, -1, -1, 1, 1, -1, -1, 1, 1, -1, -1, 1, 1, -1] |
| 24 | [1, -1, -1, 1, 1, -1, 1, -1, -1, 1, 1, -1, 1, -1, -1, 1, 1, -1, 1, -1, -1, 1, 1, -1] |
| 24 | [1, -1, 1, 1, -1, 1, -1, 1, -1, -1, 1, -1, 1, -1, 1, 1, -1, 1, -1, 1, -1, -1, 1, -1] |

It may be understood that the first extension sequence shown in Table 2 may be transformed to obtain a first extension sequence present when the first value and the second value are other values. For example, 1 in Table 2 may be changed to another value of the first value, and correspondingly, -1 in Table 2 may be changed to another value of the second value. For example, when the first value and the second value are respectively 0 and 1, 1 in Table 2 may be changed to 0, and -1 may be changed to 1, to obtain a first extension sequence in another form.

Optionally, based on a first extension sequence in each row in Table 2, a second sequence set $s_2$ in a corresponding row in Table 1 may be obtained. For example, based on the first extension sequence [1, -1, -1, 1, 1, -1, -1, 1, 1, -1] in a 1st row in Table 2, the second sequence set {x, y, y, x, x, y, y, x, x, y} in a 1st row in Table 1 may be obtained. The rest may be deduced by analogy.

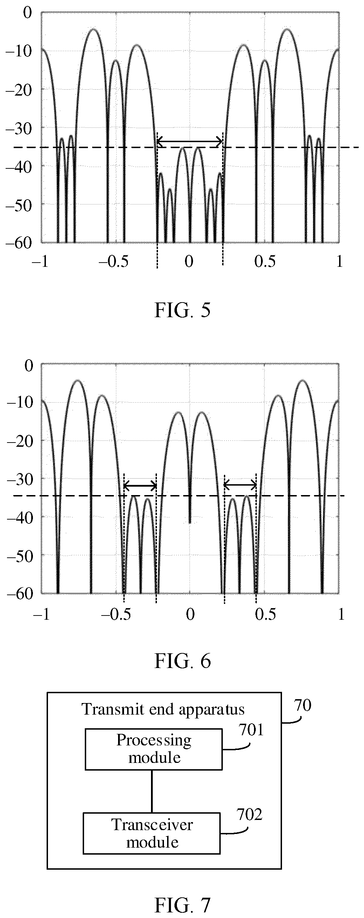

For example, N is equal to 18, and the first extension sequence is [1, -1, -1, 1, 1, -1, 1, -1, -1, 1, 1, -1, 1, -1, -1, 1, 1, -1] shown in Table 2. A spectral function that is of the first extension sequence and that is obtained according to the formula (2) is shown in FIG. 5. A vertical coordinate is energy (or a value) of the spectral function, and is in a unit of dB. A horizontal coordinate is $2v/N$, $-N/2 \leq v \leq N/2$, and $v$ is a real number. For example, a threshold is -35 dB. It can be learned from FIG. 5 and FIG. 1b that, compared with the solution in which a plurality of sequences are determined based on a PTM sequence, in the solution of this application, fewer sequences can be sent, and a larger low ambiguity zone can be generated. In other words, a quantity of sent sequences can be reduced when detection performance is improved, thereby saving resources.

For example, N is equal to 18, and the first extension sequence is [1, -1, 1, 1, -1, 1, 1, -1, 1, -1, 1, -1, -1, 1, -1, -1, 1, -1] shown in Table 2. A spectral function that is of the first extension sequence and that is obtained according to the formula (2) is shown in FIG. 6. A vertical coordinate is energy (or a value) of the spectral function, and is in a unit of dB. A horizontal coordinate is $2v/N$, $-N/2 \leq v \leq N/2$, and v is a real number. For example, the threshold is -35 dB. It can be learned from FIG. 6 that a low ambiguity zone may be generated near a non-zero Doppler frequency domain by using the first extension sequence. In other words, in the solution of this application, a low ambiguity zone may be generated at a Doppler frequency shift corresponding to a specific speed range, to detect a moving target within the speed range. In other words, if a speed of the moving target is within the speed range, the moving target can be detected. Therefore, detection flexibility and detection performance are improved. Optionally, in a possible implementation, whether a value of the nth element in the first extension sequence is the first value or the second value may be determined in a structured manner. An example is provided below.

The nth element (or the value of the nth element) in the first extension sequence is related to $\prod_{m=0}^{M-1}(c_m)^{b_m}$. $b_m$ satisfies $n = \sum_{m=0}^{M-1}(b_m \times \prod_{i=-1}^{m-1} a_i)$; $a_{-1} = 1$, $b_m = 0,1,...,a_m - 1$, $c_m$ is equal to **1** or -1, m = 0,1, ..., $M$ - 1, and n = 0,1, ..., $N$ - **1.**

Based on the foregoing relationship, $b_0, b_1, ..., and b_{M-1}$ may be obtained based on the factor sequence **a** and the index n. In addition, the value of the nth element is obtained based on $b_0, b_1, ..., and b_{M-1}$ and $c_0, c_1, ..., and c_{M-1}$ (that is, $c_m$). $b_0, b_1, ..., and b_{M-1}$ may be represented as a sequence **b**, that is, **b** = $[b_0, b_1, ..., b_{M-1}]$. $c_0, c_1, ..., and c_{M-1}$ may be represented as a sequence **c**, that is, **c** = $[c_0, c_1, ..., c_{M-1}]$. Therefore, a value of the first extension sequence may be determined by determining values of the factor sequence **a** and the sequence **c**.

Optionally, there is at least one odd number $a_j$ in the factor sequence **a**, $c_j$ corresponding to $a_j$ is equal to **-1**, and $j$ is an integer from 0 to M-1.

Optionally, $c_j$ corresponding to the odd number factor $a_j$ is equal to -1, so that in each first sub-sequence set corresponding to the odd number factor $a_j$, second sequences with a same index in any two adjacent second sub-sequence sets form the GCP. For details, refer to the foregoing descriptions of the first sub-sequence set and the second sub-sequence set that correspond to the odd number factor $a_j$. Details are not described herein again.

Optionally, there is at least one $a_k$ in the factor sequence **a**, $c_k$ corresponding to $a_k$ is equal to **1**, and $k$ is an integer from 1 to M-1. In other words, there is at least one integer $k$ in 1 to M-1, and $c_k$ corresponding to the factor $a_k$ corresponding to the integer $k$ is equal to **1.**

Optionally, $c_k$ corresponding to the factor $a_k$ is equal to 1, so that in each first sub-sequence set corresponding to $a_k$, any two adjacent second sub-sequence sets are the same. For details, refer to the foregoing descriptions of the first sub-sequence set and the second sub-sequence set that correspond to the factor $a_k$. Details are not described herein again.

Optionally, there is at least one $a_k$ in the factor sequence **a**, and $c_k$ corresponding to $a_k$ is equal to 1; and there is at least one $a_q$ in **a**, and $c_q$ corresponding to $a_q$ is equal to **-1.** k and q are integers from 1 to M-1, and M is greater than 2.

Optionally, $c_k$ corresponding to the factor $a_k$ is equal to 1, so that in each first sub-sequence set corresponding to $a_k$, any two adjacent second sub-sequence sets are the same; and $c_q$ corresponding to the factor $a_q$ is equal to -1, so that in each first sub-sequence set corresponding to $a_q$, second sequences with a same index in any two adjacent second sub-sequence sets form the GCP. For details, refer to the foregoing descriptions of first sub-sequence sets and second sub-sequence sets that correspond to the factors $a_k$ and $a_q$. Details are not described herein again.

Optionally, a 1st element in the factor sequence **a** may be an even number. In this case, a corresponding low ambiguity zone of an ambiguity function of the N second sequences is located near a zero Doppler frequency shift (that is, a Doppler frequency shift is equal to 0), and the N second sequences may be used to detect a static or low-speed moving target object. Certainly, the 1st element in the factor sequence *a* may alternatively be an odd number. In this case, the corresponding low ambiguity zone of the ambiguity function of the N second sequences is located near a Doppler frequency shift greater than 0, and the N second sequences may be used to detect a target object whose movement speed is within a specific speed range (a lowest speed of the speed range is greater than 0).

Optionally, a value of a 1st element in the sequence *c* may be -1.

For example, Table 3 shows values of the factor sequence *a* and the sequence c in some values of N in this application.

Table 3

| N | Factor sequence *a* | Sequence *c* |
|---|---|---|
| 10 | [2, 5] | [-1, -1] |
| 12 | [2, 2, 3] | [-1, -1, -1] |
| 12 | [3, 2, 2] | [-1, 1, -1] |
| 14 | [2, 7] | [-1, -1] |
| 16 | [2, 2, 2, 2] | [-1, -1, 1, 1] |
| 16 | [2, 2, 2, 2] | [-1, -1, -1, 1] |
| 18 | [2, 3, 3] | [-1, -1, 1] |
| 18 | [2, 3, 3] | [-1, -1, -1] |
| 18 | [3, 3, 2] | [-1, 1, -1] |
| 20 | [2, 2, 5] | [-1, -1, -1] |
| 20 | [2, 5, 2] | [-1, -1, 1] |
| 22 | [2, 11] | [-1, -1] |
| 24 | [2, 3, 2, 2] | [-1, -1, 1, 1] |
| 24 | [3, 2, 2, 2] | [-1, 1, -1, 1] |

Optionally, the values of the factor sequence *a* and the sequence *c* in Table 3 may be obtained through searching. For example, extension sequences corresponding to all values and combinations of the factor sequence *a* and the sequence *c*, and N second sequences corresponding to each extension sequence may be determined. Then, low ambiguity zones of ambiguity functions of the N second sequences in all cases are calculated. When a low ambiguity zone threshold is given, a factor sequence *a* and a sequence c that correspond to N second sequences with a large low ambiguity zone are selected.

Optionally, all elements in the factor sequence *a* are factors of N and are prime numbers. In addition, an element in the sequence c is -1 or 1. Therefore, when the value of N is determined, there are few cases of all values and combinations of the factor sequence *a* and the sequence *c,* and complexity of searching for the values in Table 3 is low.

Optionally, it can be learned from $b_m$ satisfying $n = \sum_{m=0}^{M-1}\left(b_m \times \prod_{i=-1}^{m-1} a_i\right)$ that the index n corresponds to one sequence *b,* and different values of n correspond to different sequences *b*. For example, N=18, that is, $n = 0,1, ...,17$, and $a = [2, 3, 3]$. Sequences *b* corresponding to values of n may be shown in Table 4.

Table 4

| n | $b = [b_0, b_1, b_2]$ | n | $b = [b_0, b_1, b_2]$ |
|---|---|---|---|
| 0 | [0, 0, 0] | 9 | [1, 1, 1] |
| 1 | [1, 0, 0] | 10 | [0, 2, 1] |
| 2 | [0, 1, 0] | 11 | [1, 2, 1] |
| 3 | [1, 1, 0] | 12 | [0, 0, 2] |
| 4 | [0, 2, 0] | 13 | [1, 0, 2] |

(continued)

| n | $\mathbf{b} = [b_0, b_1, b_2]$ | n | $\mathbf{b} = [b_0, b_1, b_2]$ |
|---|---|---|---|
| 5 | [1, 2, 0] | 14 | [0, 1, 2] |
| 6 | [0, 0, 1] | 15 | [1, 1, 2] |
| 7 | [1, 0, 1] | 16 | [0, 2, 2] |
| 8 | [0, 1, 1] | 17 | [1, 2, 2] |

Optionally, that the nth element $s_{ext}(n)$ in the first extension sequence is related to $\prod_{m=0}^{M-1}(c_m)^{b_m}$ may include:

$$s_{ext}(n) = \prod_{m=0}^{M-1}(c_m)^{b_m}$$

In this scenario, one of the first value and the second value is 1, and the other is -1.

Alternatively, that the nth element $s_{ext}(n)$ in the first extension sequence is related to $\prod_{m=0}^{M-1}(c_m)^{b_m}$ may include:

$$s_{ext}(n) = C - D \prod_{m=0}^{M-1}(c_m)^{b_m}$$

$C$ and $D$ are real numbers. $C$ and $D$ may be the same. For example, both $C$ and $D$ are equal to 1/2. In this case, one of the first value and the second value is 0, and the other is 1. Alternatively, $C$ and $D$ may be different. This is not specifically limited in this application.

Optionally, the first extension sequence shown in each row in Table 2 may be determined based on a factor sequence $\mathbf{a}$ and a sequence c in a corresponding row in Table 3 according to the foregoing formula related to the first extension sequence. Certainly, the first extension sequence may alternatively be determined in another manner. This is not specifically limited in this application.

Optionally, in another possible implementation, for whether a value of the nth element in the first extension sequence is the first value or the second value:

The first value and the second value may be phase values. In other words, a phase of each value in the first extension sequence is the first value or the second value, and amplitudes of all values in the first extension sequence are the same. For example, the first value and the second value may be respectively represented as $\varphi_C^1$ and $\varphi_C^2$. For example, $\varphi_C^1 = 0$, and $\varphi_C^2 = \pi$. Alternatively, $\varphi_C^1 = \pi$, and $\varphi_C^2 = 0$.

Optionally, the first extension sequence may include first N elements in a second extension sequence. A length of the second extension sequence is Q times a length of the first extension sequence, that is, the length of the second extension sequence is $N \times Q$ (denoted as $N_1$, that is, $N_1 = N \times Q$), and Q is greater than 1.

The second extension sequence corresponds to $N_1$ second sequences, and a correspondence between the second extension sequence and the $N_1$ second sequences is the same as a correspondence between the first extension sequence and the N second sequences. To be specific, when a value of an nth element in the second extension sequence is the first value, an nth second sequence in the $N_1$ second sequences is the sequence x in the GCP; or when a value of an nth element in the second extension sequence is the second value, an nth second sequence in the $N_1$ second sequences is the sequence y in the GCP.

For example, N is equal to 12, and Q is equal to 2, that is, $N_1$ = 24. As shown in Table 2, an extension sequence with a length of 12 includes first 12 elements in an extension sequence with a length of 24.

Optionally, a third extension sequence may include first N/Q elements in the first extension sequence. The length of the first extension sequence is Q times a length of the third extension sequence, that is, the length of the third extension sequence is $\frac{N}{Q}$ (denoted as $N_2$, that is, $N_2 = \frac{N}{Q}$).

The third extension sequence corresponds to $N_2$ second sequences, and a correspondence between the third extension sequence and the $N_2$ second sequences is the same as a correspondence between the first extension sequence and the N second sequences. For details, refer to related descriptions of the correspondence between the first extension sequence and the N second sequences. Details are not described herein again.

For example, $N_2$ = 10, and N is equal to 18 or 20 (that is, Q is greater than 1). As shown in Table 2, an extension sequence with a length of 10 includes first 10 elements in an extension sequence with a length of 18 or 20. In addition, in the extension sequences shown in Table 2, when N is equal to 14, 16, or 22, the relationship between the third extension sequence and the first extension sequence is also satisfied.

In other words, when lengths of two extension sequences are different, a shorter extension sequence may include a part of elements at the beginning of a longer extension sequence, or the longer extension sequence may be formed by appending at least one element at the end of the shorter extension sequence.

For example, when the lengths of the two extension sequences satisfy a relationship of an integer multiple greater than 1, the longer extension sequence may be repetition of the shorter extension sequence.

Optionally, when lengths of the first extension sequence and the second extension sequence satisfy a relationship of a multiple greater than 1, and the extension sequence is generated in the foregoing structured manner, the 1st element in the factor sequence corresponding to the first extension sequence is the same as a 1st element in a factor sequence corresponding to the second extension sequence. Similarly, the 1st element in the factor sequence corresponding to the first extension sequence is the same as a 1st element in a factor sequence corresponding to the third extension sequence.

Based on this solution, because there is an association between two extension sequences, when one extension sequence is known, complexity of determining the other extension sequence can be reduced. For example, the known extension sequence may be repeated to obtain the other extension sequence. In addition, when a low ambiguity zone of an ambiguity function of a plurality of second sequences corresponding to the known extension sequence is large, based on a relationship between the two extension sequences, a low ambiguity zone of an ambiguity function of a plurality of second sequences corresponding to the other extension sequence may also be good, so that detection performance is improved.

Optionally, each extension sequence and a sequence set (including a plurality of second sequences or a plurality of first sequences corresponding to the plurality of second sequences) corresponding to each extension sequence may correspond to one threshold. In a low ambiguity zone of an ambiguity function corresponding to a specific extension sequence or a sequence set corresponding to the extension sequence, a value of the ambiguity function is less than or equal to a threshold corresponding to the extension sequence or the sequence set. For example, the threshold may be -35 dB, -45 dB, -50 dB, -55 dB, or -60 dB. The threshold may be referred to as a threshold of the low ambiguity zone.

Optionally, an extension sequence and a sequence set of the extension sequence may be designed based on a threshold corresponding to the extension sequence and the sequence set. For example, a threshold is given, and an extension sequence and a sequence set that correspond to the threshold may be determined based on the threshold. In a low ambiguity zone of an ambiguity function corresponding to the extension sequence or the sequence set designed based on the threshold, a value of the ambiguity function is less than or equal to the threshold.

Optionally, in a scenario in which each extension sequence and a sequence set corresponding to the extension sequence correspond to one threshold, in step S401, when the transmit end apparatus autonomously determines the N first sequences, a plurality of sequence sets (for example, each sequence set includes a plurality of first sequence sets) may be preconfigured in the transmit end apparatus. In this case, the transmit end apparatus may determine the first sequence set (that is, the N first sequences) from the plurality of sequence sets based on a first threshold. In a low ambiguity zone of an ambiguity function corresponding to the first sequence set, a value of the ambiguity function corresponding to the first sequence set is less than or equal to the first threshold.

Optionally, the first threshold may be determined based on a detection requirement or precision. When the detection precision is high, the first threshold may be a large threshold. When the detection precision is low, the first threshold may be a small threshold.

Optionally, the transmit end apparatus may select, as the first sequence set, a sequence set that is in the plurality of sequence sets and whose corresponding threshold is less than or equal to the first threshold.

Optionally, the foregoing descriptions are provided by using an example in which each sequence set preconfigured in the transmit end apparatus includes a plurality of first sequences. In addition, the plurality of sequence sets preconfigured in the transmit end apparatus may alternatively be sequence sets including a plurality of second sequences. The transmit end apparatus may select a second sequence set based on the first threshold, and then determine the first sequence set based on the second sequence set. Alternatively, a plurality of extension sequences may be preconfigured in the transmit end apparatus. The transmit end apparatus may select the first extension sequence based on the first threshold, determine a second sequence set based on the first extension sequence, and then determine the first sequence set based on the second sequence set. This is not specifically limited in this application.

In the foregoing solution, the nth first sequence in the N first sequences is determined based on the nth second sequence in the N second sequences. The following describes a relationship between the nth first sequence and the nth second sequence. Optionally, the nth first sequence and the nth second sequence satisfy one of the following four relationships:

Relationship 1: The nth first sequence and the nth second sequence are the same.

For example, if the nth second sequence is the sequence x in the GCP, the nth first sequence is also the sequence x in the GCP. If the nth second sequence is the sequence y in the GCP, the nth first sequence is also the sequence y in the GCP. In addition, in this scenario, the first sequence and the second sequence have a same length.

Based on the relationship 1, the nth first sequence and the nth second sequence are the same, and there is no need to perform correlation calculation on the second sequence to obtain the first sequence, so that implementation complexity at a transmit end can be reduced.

Relationship 2: The nth first sequence is obtained by splicing the nth second sequence and at least one 0.

It may be understood that, in this scenario, the length $L_1$ of the first sequence is greater than the length $L_2$ of the second sequence. A quantity of 0s in the first sequence is $L_1 - L_2$.

Optionally, at least one 0 may be appended at the beginning and/or the end of the nth second sequence to obtain the nth first sequence. For example, at least one 0 is appended at the end of the second sequence. When the second sequence is the sequence x or the sequence y in the GCP, the first sequence may be respectively represented by the following formulas:

$$d_{1,n}(i) = \begin{cases} x(i) & , i = 0,1,\ldots,L_2 - 1 \\ 0 & , i = L_2, L_2 + 1, \ldots, L_1 - 1 \end{cases}$$

$$d_{1,n}(i) = \begin{cases} y(i) & , i = 0,1,\ldots,L_2 - 1 \\ 0 & , i = L_2, L_2 + 1, \ldots, L_1 - 1 \end{cases}$$

$d_{1,n}(i)$ represents an ith element in the nth first sequence. $x(i)$ represents an ith element in the sequence x in the GCP. $y(i)$ represents an ith element in the sequence y in the GCP.

Based on the relationship 2, at least one 0 is appended at the beginning and/or the end of the nth second sequence, which is equivalent to introducing a zero padding (zero padding, ZP), so that interference between a plurality of transmit ends can be reduced. In addition, the zero padding can be used to assist in synchronization or to assist in detecting a location of a target object.

Relationship 3: The nth first sequence is obtained by performing cyclic extension on the nth second sequence.

Optionally, in this scenario, the length $L_1$ of the first sequence may be greater than the length $L_2$ of the second sequence.

Optionally, an ith element in the nth first sequence and an ith element in the nth second sequence may satisfy the following relationship:

$$d_{1,n}(i) = d_{2,n}[(i + \Delta) \bmod L_2], i = 0,1,\ldots,L_1 - 1$$

$d_{1,n}(i)$ represents the ith element in the nth first sequence; $d_{2,n}(i)$ represents the ith element in the nth second sequence; $\Delta$ represents an offset of cyclic extension; mod represents a modulo operation; $L_2$ is the length of the second sequence; and $L_1$ is the length of the first sequence. It may be understood that both $d_{2,n}(i)$ and $d_{2,n}[i]$ represent the ith element in the nth second sequence.

For example, $\Delta = 2$, and $L_2 = 128$. When $i = 0$, a 0th element $d_{1,n}(0)$ in the nth first sequence is equal to $d_{2,n}[(2) \bmod 128] = d_{2,n}(2)$, that is, the 0th element in the nth first sequence is equal to a 2nd element in the nth second sequence. When i = 1, a 1st element $d_{1,n}(1)$ in the nth first sequence is equal to $d_{2,n}[(3) \bmod 128] = d_{2,n}(3)$, that is, the 0th element in the nth first sequence is equal to a 3rd element in the nth second sequence. By analogy, all elements in the nth first sequence can be obtained.

Based on the relationship 3, the length of the first sequence can be flexibly adjusted through cyclic extension, which is equivalent to introducing a cyclic prefix (cyclic prefix, CP) and/or a cyclic suffix, so that flexibility and applicability of the solution are improved. In addition, the cyclic prefix and/or the cyclic suffix can be used to assist in synchronization or to assist in detecting a location of a target object.

Relationship 4: The nth first sequence is obtained by splicing at least one 0 and a result obtained by performing cyclic extension on the nth second sequence.

For cyclic extension of the second sequence, refer to the descriptions in the relationship 3. For splicing of the cyclic extension result and the at least one 0, refer to the descriptions in the relationship 2. Details are not described herein again.

Based on the relationship 4, when the length of the first sequence is flexibly adjusted through cyclic extension, a cyclic prefix and/or suffix and a zero padding can be further introduced, so that interference between a plurality of transmit ends is reduced. In addition, the cyclic prefix and/or the cyclic suffix and the zero padding can be used to assist in synchronization or to assist in detecting a location of a target object.

It may be understood that, in the foregoing embodiment, the method and/or the steps implemented by the transmit end apparatus may alternatively be implemented by a component (for example, a processor, a chip, a chip system, a circuit, a logical module, or software such as a chip or a circuit) that can be used in the transmit end apparatus. The method and/or the steps implemented by the receive end apparatus may alternatively be implemented by a component (for example, a processor, a chip, a chip system, a circuit, a logical module, or software such as a chip or a circuit) that can be used in the receive end apparatus.

The foregoing mainly describes the solutions provided in this application from a perspective of interaction between devices. Correspondingly, this application further provides a communication apparatus, and the communication apparatus is configured to implement the foregoing method. The communication apparatus may be the transmit end apparatus in the method embodiment, an apparatus including the transmit end apparatus, or a component that can be used in the transmit end apparatus. Alternatively, the communication apparatus may be the receive end apparatus in the method embodiment, an apparatus including the receive end apparatus, or a component that can be used in the receive end apparatus.

It may be understood that, to implement the foregoing functions, the communication apparatus includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

In an implementation scenario, an example in which the communication apparatus is the transmit end apparatus in the method embodiment is used. FIG. 7 is a diagram of a structure of a transmit end apparatus 70. The transmit end apparatus 70 includes a processing module 701 and a transceiver module 702.

In some embodiments, the transmit end apparatus 70 may further include a storage module (not shown in FIG. 7), configured to store program instructions and data.

In some embodiments, the transceiver module 702 may also be referred to as a transceiver unit, configured to implement a sending function and/or a receiving function. The transceiver module 702 may include a transceiver circuit, a transceiver machine, a transceiver, or a communication interface.

In some embodiments, the transceiver module 702 may include a receiving module and a sending module, respectively configured to perform receiving and sending steps performed by the transmit end apparatus in the method embodiment, and/or configured to support another process of the technology described in this specification. The processing module 701 may be configured to perform processing (for example, determining and generation) steps performed by the transmit end apparatus in the method embodiment, and/or configured to support another process of the technology described in this specification.

For example, the processing module 701 is configured to determine N first sequences. The transceiver module 702 is configured to send the N first sequences. An $n^{th}$ first sequence in the N first sequences is determined based on an $n^{th}$ second sequence in N second sequences, $N = \prod_{m=0}^{M-1} a_m$, $a_m$ is a prime number, M is a positive integer greater than 1, and $n = 0, 1, ..., N - 1$.

Each second sequence is a sequence in a Golay complementary pair GCP. The N second sequences include $\frac{N}{\prod_{i=-1}^{m} a_i}$ first sub-sequence sets. Each first sub-sequence set includes $a_m$ second sub-sequence sets, each second sub-sequence set includes $\prod_{i=-1}^{m-1} a_i$ second sequences, $m = 0, 1, ..., M - 1$, and $a_{-1} = 1$. In each first sub-sequence set, any two adjacent second sub-sequence sets are the same, or second sequences with a same index in any two adjacent second sub-sequence sets form a GCP.

Optionally, the processing module 701 is specifically configured to: determine, based on a first threshold, a first sequence set from a plurality of sequence sets, where in a low ambiguity zone of an ambiguity function corresponding to the first sequence set, a value of the ambiguity function corresponding to the first sequence set is less than or equal to the first threshold.

In this application, the transmit end apparatus 70 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the transmit end apparatus 70 may be in a form of the communication apparatus 30 shown in FIG. 3.

In an example, a function/implementation process of the processing module 701 in FIG. 7 may be implemented by the processor 301 in the communication apparatus 30 shown in FIG. 3 by invoking the computer-executable instructions stored in the memory 303. A function/implementation process of the transceiver module 702 in FIG. 7 may be implemented by the communication interface 304 in the communication apparatus 30 shown in FIG. 3.

In some embodiments, when the transmit end apparatus 70 in FIG. 7 is a chip or a chip system, a function/implementation process of the transceiver module 702 may be implemented by an input/output interface (or a communication interface) of the chip or the chip system, and a function/implementation process of the processing module 701 may be implemented by a processor (or a processing circuit) of the chip or the chip system.

The transmit end apparatus 70 provided in this embodiment may perform the foregoing method. Therefore, for technical effects that can be achieved by the transmit end apparatus, refer to the method embodiment. Details are not described herein again.

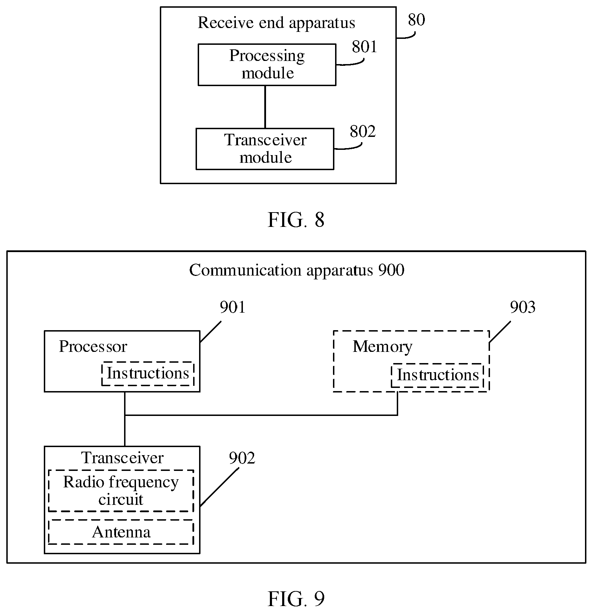

In another implementation scenario, an example in which the communication apparatus is the receive end apparatus in the method embodiment is used. FIG. 8 is a diagram of a structure of a receive end apparatus 80. The receive end apparatus 80 includes a processing module 801 and a transceiver module 802.

In some embodiments, the receive end apparatus 80 may further include a storage module (not shown in FIG. 8), configured to store program instructions and data.

In some embodiments, the transceiver module 802 may also be referred to as a transceiver unit, configured to implement a sending function and/or a receiving function. The transceiver module 802 may include a transceiver circuit, a transceiver machine, a transceiver, or a communication interface.

In some embodiments, the transceiver module 802 may include a receiving module and a sending module, respectively configured to perform receiving and sending steps performed by the receive end apparatus in the method embodiment, and/or configured to support another process of the technology described in this specification. The processing module 801 may be configured to perform processing (for example, determining and generation) steps performed by the receive end apparatus in the method embodiment, and/or configured to support another process of the technology described in this specification.

For example, the transceiver module 802 is configured to receive a first signal. The processing module 801 is configured to process the first signal based on N first sequences or N second sequences. The first signal is a signal obtained by transmitting the N first sequences, an $n^{th}$ first sequence in the N first sequences is determined based on an $n^{th}$ second sequence in the N second sequences, $N = \prod_{m=0}^{M-1} a_m$, $a_m$ is a prime number, M is a positive integer greater than 1, *and n = 0,1, ...,N - 1.*

Each second sequence is a sequence in a Golay complementary pair GCP. The N second sequences include $\frac{N}{\prod_{i=-1}^{m} a_i}$ first sub-sequence sets. Each first sub-sequence set includes $a_m$ second sub-sequence sets, each second sub-sequence set includes $\prod_{i=-1}^{m-1} a_i$ second sequences, *m* = 0,1, ... , *M* - 1, and $a_{-1}$ = 1. In each first sub-sequence set, any two adjacent second sub-sequence sets are the same, or second sequences with a same index in any two adjacent second sub-sequence sets form a GCP.

In this application, the receive end apparatus 80 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the receive end apparatus 80 may be in a form of the communication apparatus 30 shown in FIG. 3.

In an example, a function/implementation process of the processing module 801 in FIG. 8 may be implemented by the processor 301 in the communication apparatus 30 shown in FIG. 3 by invoking the computer-executable instructions stored in the memory 303. A function/implementation process of the transceiver module 802 in FIG. 8 may be implemented by the communication interface 304 in the communication apparatus 30 shown in FIG. 3.

In some embodiments, when the receive end apparatus 80 in FIG. 8 is a chip or a chip system, a function/implementation process of the transceiver module 802 may be implemented by an input/output interface (or a communication interface) of the chip or the chip system, and a function/implementation process of the processing module 801 may be implemented by a processor (or a processing circuit) of the chip or the chip system.

The receive end apparatus 80 provided in this embodiment may perform the foregoing method. Therefore, for technical effects that can be achieved by the receive end apparatus, refer to the method embodiment. Details are not described herein again.

In a possible product form, the transmit end apparatus and the receive end apparatus in embodiments of this application may alternatively be implemented by using the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform various functions described throughout this application.

In another possible product form, the transmit end apparatus or the receiving end apparatus in embodiments of this application may be implemented by using a general bus architecture. For ease of description, refer to FIG. 9. FIG. 9 is a diagram of a structure of a communication apparatus 900 according to an embodiment of this application. The communication apparatus 900 includes a processor 901 and a transceiver 902. The communication apparatus 900 may be a transmit end apparatus, or a chip or a module in the transmit end apparatus. Alternatively, the communication apparatus 900 may be a receive end apparatus, or a chip or a module in the receive end apparatus. FIG. 9 shows only main components in the communication apparatus 900. In addition to the processor 901 and the transceiver 902, the communication apparatus may further include a memory 903.

Optionally, the processor 901 is mainly configured to: process a communication protocol and communication data, control the entire communication apparatus, execute a software program, and process data of the software program. The memory 903 is mainly configured to store the software program and data. The transceiver 902 may include a radio frequency circuit and an antenna. The radio frequency circuit is mainly configured to perform conversion between a baseband signal and a radio frequency signal and process the radio frequency signal. The antenna is mainly configured to receive and send radio frequency signals in a form of an electromagnetic wave.

Optionally, the processor 901, the transceiver 902, and the memory 903 may be connected through a communication bus.

After the communication apparatus is powered on, the processor 901 may read the software program in the memory 903, interpret and execute instructions of the software program, and process the data of the software program. When data needs to be sent in a wireless manner, the processor 901 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 901. The processor 901 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any method embodiment. The communication apparatus may be the transmit end apparatus or the receive end apparatus in the method embodiment.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any method embodiment. Certainly, the memory may not be in the communication apparatus.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read through another device) and transmit the computer-executable instructions to a processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any method embodiment are implemented.

This application further provides a computer program product. When the computer program product is executed by a computer, functions in any method embodiment are implemented.

A person of ordinary skill in the art may understand that, for the purpose of convenient and brief description, for a detailed working process of the foregoing system, apparatuses, and units, refer to a corresponding process in the method embodiment. Details are not described herein again.

It may be understood that the system, apparatuses, and method described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, that is, may be located at one position, or may be distributed on a plurality of network units. A part displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. Clearly, a person skilled in the art can make various modifications and variations to this application without departing from the spirit and scope of this application. This application is intended to cover these modifications and variations of this application provided that they fall within the scope of protection defined by the claims of this application and their equivalent technologies.

**Claims**

1. A sequence transmission method, wherein the method comprises:

determining N first sequences, wherein an $n^{th}$ first sequence in the N first sequences is determined based on an $n^{th}$ second sequence in N second sequences, $N = \prod_{m=0}^{M-1} a_m$, $a_m$ is a prime number, M is an integer greater than 1, n = 0,1, ... , *N* - 1, and N is a positive integer greater than 1; and
sending the N first sequences, wherein
each second sequence is a sequence in a Golay complementary pair GCP; the N second sequences comprise $\frac{N}{\prod_{i=-1}^{m} a_i}$ first sub-sequence sets, each first sub-sequence set comprises $a_m$ second sub-sequence sets, each second sub-sequence set comprises $\prod_{i=-1}^{m-1} a_i$ second sequences, m = 0,1, ... , *M* - 1, and $a_{-1}$ = 1; and in each first sub-sequence set, any two adjacent second sub-sequence sets are the same, or second sequences with a same index in any two adjacent second sub-sequence sets form the GCP.

2. The method according to claim 1, wherein the N first sequences form a first sequence set, and determining the N first sequences comprises:
determining, based on a first threshold, the first sequence set from a plurality of sequence sets, wherein in a low ambiguity zone of an ambiguity function corresponding to the first sequence set, a value of the ambiguity function corresponding to the first sequence set is less than or equal to the first threshold.

3. A sequence receiving method, wherein the method comprises:

receiving a first signal, wherein the first signal is a signal obtained by transmitting N first sequences, an $n^{th}$ first sequence in the N first sequences is determined based on an $n^{th}$ second sequence in N second sequences, $N = \prod_{m=0}^{M-1} a_m$ , $a_m$ is a prime number, M is a positive integer greater than 1, and $n$ = 0,1, ... , *N* - 1; and
processing the first signal based on the N first sequences or the N second sequences, wherein
each second sequence is a sequence in a Golay complementary pair GCP; the N second sequences comprise $\frac{N}{\prod_{i=-1}^{m} a_i}$ first sub-sequence sets, each first sub-sequence set comprises $a_m$ second sub-sequence sets, each second sub-sequence set comprises $\prod_{i=-1}^{m-1} a_i$ second sequences, m = 0,1, ... , *M* - 1, and $a_{-1}$ = 1; and in each first sub-sequence set, any two adjacent second sub-sequence sets are the same, or second sequences with a same index in any two adjacent second sub-sequence sets form the GCP.

4. The method according to any one of claims 1 to 3, wherein the N second sequences comprise $\left\lfloor \frac{N}{2} \right\rfloor$ sequence groups, there are at least two different sequence groups in the $\left\lfloor \frac{N}{2} \right\rfloor$ sequence groups, and ⌊⌋ indicates rounding down; and
when N is an odd number, the $\left\lfloor \frac{N}{2} \right\rfloor$ sequence groups comprise first N-1 second sequences in the N second sequences.

5. The method according to any one of claims 1 to 4, wherein $a_m$, m = 0,1, ... , *M* - 1 forms **a** = [$a_0$, ..., $a_{M-1}$], there is at least one odd number $a_j$ in **a**, second sequences with a same index in any two adjacent second sub-sequence sets in the first sub-sequence set corresponding to $a_j$ form the GCP, and j is an integer from 0 to M-1.

6. The method according to any one of claims 1 to 5, wherein $a_m$, m = 0,1, ... , *M* - 1 forms **a** = [$a_0$, ..., $a_{M-1}$], there is at least one $a_k$ in **a**, any two adjacent second sub-sequence sets in the first sub-sequence set corresponding to $a_k$ are the same, and *k* is an integer from 1 to M-1.

7. The method according to any one of claims 1 to 6, wherein the N second sequences correspond to a first extension sequence;

when an $n^{th}$ element in the first extension sequence is a first value, the $n^{th}$ second sequence in the N second sequences is a sequence x in the GCP; or when an $n^{th}$ element in the first extension sequence is a second value, the $n^{th}$ second sequence in the N second sequences is a sequence y in the GCP; and
the $n^{th}$ element in the first extension sequence is related to $\prod_{m=0}^{M-1}(c_m)^{b_m}$ , $b_m$ satisfies $n = \sum_{m=0}^{M-1}(b_m \times \prod_{i=-1}^{m-1} a_i)$ , $a_{-1}$ = 1, $b_m$ = 0,1, ... , $a_m$ - 1, $c_m$ is equal to 1 or -1, m = 0,1, ... , *M* - 1, and $n$ = 0,1, ... , *N* - 1.

8. The method according to claim 7, wherein the first extension sequence comprises $\left\lfloor \frac{N}{2} \right\rfloor$ element groups, there are at least two different element groups in the $\left\lfloor \frac{N}{2} \right\rfloor$ element groups, and ⌊ ⌋ indicates rounding down; and

   when N is an odd number, the $\left\lfloor \frac{N}{2} \right\rfloor$ element groups comprise first N-1 elements in the first extension sequence.

9. The method according to claim 7 or 8, wherein $a = [a_0, ..., a_{M-1}]$, there is at least one odd number $a_j$ in $a$, $c_j$ corresponding to $a_j$ is equal to -1, and j is an integer from 0 to M-1.

10. The method according to any one of claims 7 to 9, wherein $a = [a_0, ..., a_{M-1}]$, there is at least one $a_k$ in $a$, $c_k$ corresponding to $a_k$ is equal to 1, and k is an integer from 1 to M-1.

11. The method according to any one of claims 7 to 10, wherein the nth element in the first extension sequence satisfies at least one of the following:

$$s_{ext}(n) = \prod_{m=0}^{M-1} (c_m)^{b_m} \; ;$$

   and

$$s_{ext}(n) = \frac{1}{2} - \frac{1}{2} \prod_{m=0}^{M-1} (c_m)^{b_m},$$

   wherein
   $s_{ext}(n)$ represents the nth element in the first extension sequence.

12. The method according to any one of claims 7 to 11, wherein the first extension sequence comprises first N elements in a second extension sequence, a length of the second extension sequence is Q times a length of the first extension sequence, and Q is greater than 1; and/or
   a third extension sequence comprises first N/Q elements in the first extension sequence, and the length of the first extension sequence is Q times a length of the third extension sequence.

13. The method according to any one of claims 7 to 12, wherein $a = [a_0, ... , a_{M-1}]$, $c = [c_0, ... , c_{M-1}]$, and $a$ and c satisfy at least one of the following:

   when N is equal to 10, $a$ =[2, 5], and $c$ =[-1, -1];
   when N is equal to 12, $a$ =[2, 2, 3], and $c$ =[-1, -1, -1];
   when N is equal to 12, $a$ =[3, 2, 2], and $c$ =[-1, 1, -1];
   when N is equal to 14, $a$ =[2, 7], and $c$ =[-1, -1];
   when N is equal to 16, $a$ =[2, 2, 2, 2], and $c$ =[-1, -1, 1, 1];
   when N is equal to 16, $a$ =[2, 2, 2, 2], and $c$ =[-1, -1, -1, 1];
   when N is equal to 18, $a$ =[2, 3, 3], and $c$ =[-1, -1, 1];
   when N is equal to 18, $a$ =[2, 3, 3], and $c$ =[-1, -1, -1];
   when N is equal to 18, $a$ =[3, 3, 2], and $c$ =[-1, 1, -1];
   when N is equal to 20, $a$ =[2, 2, 5], and $c$ =[-1, -1, -1];
   when N is equal to 20, $a$ =[2, 5, 2], and $c$ =[-1, -1, 1];
   when N is equal to 22, $a$ =[2, 11], and $c$ =[-1, -1];
   when N is equal to 24, $a$ =[2, 3, 2, 2], and $c$ =[-1, -1, 1, 1]; or
   when N is equal to 24, $a$ =[3, 2, 2, 2], and $c$ =[-1, 1, -1, 1].

14. The method according to any one of claims 7 to 13, wherein the first value is 1, the second value is -1, and the first extension sequence is at least one of the following:

when N is equal to 10, the first extension sequence is [1, -1, -1, 1, 1, -1, -1, 1, 1, -1];
when N is equal to 12, the first extension sequence is [1, -1, -1, 1, -1, 1, 1, -1, 1, -1, -1, 1];
when N is equal to 12, the first extension sequence is [1, -1, 1, 1, -1, 1, -1, 1, -1, -1, 1, -1];
when N is equal to 14, the first extension sequence is [1, -1, -1, 1, 1, -1, -1, 1, 1, -1, -1, 1, 1, -1];
when N is equal to 16, the first extension sequence is [1, -1, -1, 1, 1, -1, -1, 1, 1, -1, -1, 1, 1, -1, -1, 1];
when N is equal to 16, the first extension sequence is [1, -1, -1, 1, -1, 1, 1, -1, 1, -1, -1, 1, -1, 1, 1, -1];
when N is equal to 18, the first extension sequence is [1, -1, -1, 1, 1, -1, 1, -1, -1, 1, 1, -1, 1, -1, -1, 1, 1, -1];
when N is equal to 18, the first extension sequence is [1, -1, -1, 1, 1, -1, -1, 1, 1, -1, -1, 1, 1, -1, -1, 1, 1, -1];
when N is equal to 18, the first extension sequence is [1, -1, 1, 1, -1, 1, 1, -1, 1, -1, 1, -1, - 1, 1, -1, -1, 1, -1];
when N is equal to 20, the first extension sequence is [1, -1, -1, 1, -1, 1, 1, -1, 1, -1, -1, 1, -1, 1, 1, -1, 1, -1, -1, 1];
when N is equal to 20, the first extension sequence is [1, -1, -1, 1, 1, -1, -1, 1, 1, -1, 1, -1, -1, 1, 1, -1, -1, 1, 1, -1];
when N is equal to 22, the first extension sequence is [1, -1, -1, 1, 1, -1, -1, 1, 1, -1, -1, 1, 1, -1, -1, 1, 1, -1, -1, 1, 1, -1];
when N is equal to 24, the first extension sequence is [1, -1, -1, 1, 1, -1, 1, -1, -1, 1, 1, -1, 1, -1, -1, 1, 1, -1, 1, -1, -1, 1, 1, -1]; or
when N is equal to 24, the first extension sequence is [1, -1, 1, 1, -1, 1, -1, 1, -1, -1, 1, -1, 1, -1, 1, 1, -1, 1, -1, 1, -1, -1, 1, -1].

15. The method according to any one of claims 1 to 14, wherein the n$^{th}$ first sequence in the N first sequences and the n$^{th}$ second sequence in the N second sequences satisfy one of the following:

the n$^{th}$ first sequence is the same as the n$^{th}$ second sequence;
the n$^{th}$ first sequence is obtained by splicing the n$^{th}$ second sequence and at least one 0;
the n$^{th}$ first sequence is obtained by performing cyclic extension on the n$^{th}$ second sequence; or
the n$^{th}$ first sequence is obtained by splicing at least one 0 and a result obtained by performing cyclic extension on the n$^{th}$ second sequence.

16. The method according to claim 15, wherein when the n$^{th}$ first sequence is obtained by performing cyclic extension on the n$^{th}$ second sequence,

$$d_{1,n}(i) = d_{2,n}[(i + \Delta) \bmod L_2], i = 0, 1, \dots, L_1 - 1,$$

wherein
$d_{1,n}(i)$ represents an i$^{th}$ element in the n$^{th}$ first sequence; $d_{2,n}(i)$ represents an i$^{th}$ element in the n$^{th}$ second sequence; $\Delta$ represents an offset of cyclic extension; mod represents a modulo operation; $L_2$ is a length of the second sequence; and $L_1$ is a length of the first sequence.

17. The method according to any one of claims 1 to 16, wherein the N second sequences are at least one of the following:

when N is equal to 10, the N second sequences are {x, y, y, x, x, y, y, x, x, y};
when N is equal to 12, the N second sequences are {x, y, y, x, y, x, x, y, x, y, y, x};
when N is equal to 12, the N second sequences are {x, y, x, x, y, x, y, x, y, y, x, y};
when N is equal to 14, the N second sequences are {x, y, y, x, x, y, y, x, x, y, y, x, x, y};
when N is equal to 16, the N second sequences are {x, y, y, x, x, y, y, x, x, y, y, x, x, y, y, x};
when N is equal to 16, the N second sequences are {x, y, y, x, y, x, x, y, x, y, y, x, y, x, x, y};
when N is equal to 18, the N second sequences are {x, y, y, x, x, y, x, y, y, x, x, y, x, y, y, x, x, y};
when N is equal to 18, the N second sequences are {x, y, y, x, x, y, y, x, x, y, y, x, x, y, y, x, x, y};
when N is equal to 18, the N second sequences are {x, y, x, x, y, x, x, y, x, y, x, y, y, x, y, y, x, y};
when N is equal to 20, the N second sequences are {x, y, y, x, y, x, x, y, x, y, y, x, y, x, x, y, x, y, y, x};
when N is equal to 20, the N second sequences are {x, y, y, x, x, y, y, x, x, y, x, y, y, x, x, y, y, x, x, y};
when N is equal to 22, the N second sequences are {x, y, y, x, x, y, y, x, x, y, y, x, x, y, y, x, x, y, y, x, x, y};
when N is equal to 24, the N second sequences are {x, y, y, x, x, y, x, y, y, x, x, y, x, y, y, x, x, y, x, y, y, x, x, y}; or
when N is equal to 24, the N second sequences are {x, y, x, x, y, x, y, x, y, y, x, y, x, y, x, x, y, x, y, x, y, y, x, y}, wherein x represents the sequence x in the GCP, and y represents the sequence y in the GCP.

18. A communication apparatus, comprising a module or unit configured to perform the method according to any one of claims 1, 2, and 4 to 17, or comprising a module or unit configured to perform the method according to any one of claims 3 to 17.

19. A communication apparatus, wherein the communication apparatus comprises a processor, and the processor is configured to run a computer program or instructions, or is configured to enable, through a logic circuit, the communication apparatus to perform the method according to any one of claims 1, 2, and 4 to 17 or the method according to any one of claims 3 to 17.

20. A computer-readable storage medium, wherein the computer-readable storage medium stores computer instructions or a program; and when the computer instructions or the program runs on a computer, the method according to any one of claims 1, 2, and 4 to 17 is performed, or the method according to any one of claims 3 to 17 is performed.

21. A computer program product, wherein the computer program product comprises computer instructions; and when a part or all of the computer instructions are run, the method according to any one of claims 1, 2, and 4 to 17 is performed, or the method according to any one of claims 3 to 17 is performed.

22. A communication system, wherein the communication system comprises a transmit end apparatus and a receive end apparatus, the transmit end apparatus is configured to perform the method according to any one of claims 1, 2, and 4 to 17, and the receive end apparatus is configured to perform the method according to any one of claims 3 to 17.

FIG. 1a

FIG. 1b

FIG. 1c

Transmit end
apparatus

⟷

Receive end
apparatus

FIG. 2

30

301

303

Processor

CPU 0

CPU 1

Memory

Communication
bus 302

304

305

306

Communication
interface

Output device

Input device

FIG. 3

Transmit end
apparatus

Receive end
apparatus

S401: Determine N first sequences, where an
$n^{th}$ first sequence is determined based on an $n^{th}$
second sequence, and the second sequence is a
sequence in a GCP

S402: The transmit end apparatus sends
the N first sequences, and the receive end
apparatus receives a first signal (a signal
obtained by transmitting the N first
sequences)

S403: Process the first signal based on the N
first sequences or N second sequences

FIG. 4

FIG. 5

FIG. 6

Transmit end apparatus    70

Processing
module    701

Transceiver
module    702

FIG. 7

Receive end apparatus 80

Processing module 801

Transceiver module 802

FIG. 8

Communication apparatus 900

Processor 901

Instructions

Memory 903

Instructions

Transceiver 902

Radio frequency circuit

Antenna

FIG. 9

## INTERNATIONAL SEARCH REPORT

International application No.

**PCT/CN2022/138741**

| A. | CLASSIFICATION OF SUBJECT MATTER |
|---|---|

H04L 27/00(2006.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; 3GPP; IEEE; CNKI: 序列, 格雷, 互补, 索引, 相邻, 集合, 子集, sequence, golay, complementary, GCP, index, adjacent, set of, subset

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022012381 A1 (HUAWEI TECHNOLOGIES CO., LTD.) 20 January 2022 (2022-01-20) description, page 1, line 35 to page 7, line 22 | 1-22 |
| A | US 2022060272 A1 (IDAC HOLDINGS, INC.) 24 February 2022 (2022-02-24) entire document | 1-22 |
| A | WO 2019035961 A1 (INTERDIGITAL PATENT HOLDINGS INC.) 21 February 2019 (2019-02-21) entire document | 1-22 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 August 2023** | **28 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2022/138741** |

| Patent document cited in search report | | | Publication date (day/month/year) | Patent family member(s) | | | Publication date (day/month/year) |
| --- | --- | --- | --- | --- | --- | --- | --- |
| WO | 2022012381 | A1 | 20 January 2022 | None | | | |
| US | 2022060272 | A1 | 24 February 2022 | US | 11689307 | B2 | 27 June 2023 |
| WO | 2019035961 | A1 | 21 February 2019 | None | | | |

Form PCT/ISA/210 (patent family annex) (July 2022)